# EUROPEAN PATENT APPLICATION

(11) **EP 4 603 733 A1**
(43) Date of publication of application: **20.08.2025**
(21) Application number: 25157081.8
(22) Date of filing: 11.02.2025
(51) Int. Cl.: F16L 5/08, F16L 5/12, F16L 23/032

(54) **BULKHEAD ASSEMBLY AND METHOD OF ASSEMBLING SUCH**

(30) Priority: 14.02.2024 US 202463553203 P; 11.12.2024 US 202418976687
(71) Applicant: Deere & Company, Moline, IL 61265 (US)
(72) Inventor: Short, Daniel T., Mannheim (DE)
(74) Representative: Reichert, Christian

(57) **Abstract**

A bulkhead assembly is disclosed. The bulkhead assembly comprising a bulkhead plate (600) and a flange clamp (512) for coupling a fluid connector (700) to the bulkhead plate (600), the flange clamp (512) comprising: a clamp body (514) having a curved inner surface configured to be engageable with a fluid connector (700); a plurality of openings (518, 520, 522) formed in the clamp body (514), the plurality of openings (518, 520, 522) including at least a first opening (518), a second opening (520), and a third opening (522); at least one extended body portion (536) integrally formed at an outer periphery of the clamp body (514); a retaining portion (534) integrally formed with the at least one extended body portion (536), the retaining portion (534) projecting away from the at least one extended body portion (536); wherein the retaining portion (534) is configured to be disposable within an opening formed in the bulkhead plate (600), where the retaining portion (534) is configured to selectively maintain an orientation of the clamp body (514) on the bulkhead plate (600). Further, a method of assembling such a bulkhead assembly is disclosed.

## Description

### FIELD OF THE DISCLOSURE

The present disclosure relates to a bulkhead application on a work machine, and in particular, to a flanged clamp union assembly for a bulkhead on a work machine.

### BACKGROUND

Work machines, such as those in the agricultural, construction, and forestry industries, may include one or more hydraulic connections for fluidly coupling a pair of fluid lines or hoses to one another. These hydraulic connections may be flanged connections as found in bulkhead applications for larger work machines.

### SUMMARY

In one implementation of the present disclosure, a flange clamp is provided for coupling a fluid connector to a bulkhead plate of a bulkhead assembly, the flange clamp including a clamp body having a curved inner surface configured to engage with the fluid connector; a plurality of openings formed in the clamp body, the plurality of openings including at least a first opening, a second opening, and a third opening; an extended body portion integrally formed at an outer periphery of the clamp body; a retaining portion formed on a first surface of the extended body portion, the retaining portion projecting away from the first surface; wherein the retaining portion is configured to be disposed within a keyhole or other opening formed in the bulkhead plate, where the retaining portion is configured to selectively maintain an orientation of the clamp body on the bulkhead plate.

In one example of this implementation, the plurality of openings formed in the clamp body are axially aligned with one another. In a second example, the third opening is formed in the extended body portion, the third opening defined through the projecting portion. In a third example, the clamp body includes a first end and a second end, the second end spaced from the first end, where the extended body portion extends from the second end of the clamp body. In a fourth example, the clamp body includes a first end and a second end, the second end spaced from the first end, where the extended body portion extends from the clamp body at a location between the first end and the second end.

In a fifth example, the first opening is formed in the clamp body adjacent the first end, the second opening is formed in the clamp body adjacent the second end, and the third opening is formed in the extended body portion at a location between the first and second openings. In a sixth example, the retaining portion includes a shaped profile having at least three sides. In a seventh example, the retaining portion includes a triangular-shaped profile, square-shaped profile, rectangular-shaped profile, pentagonal-shaped profile, hexagonal-shaped profile, or octagonal-shaped profile. In another example, the clamp body includes a first body portion and a second body portion, the first body portion being offset from the second body portion. In yet another example, a post portion is located between the first body portion and the second body portion. In a further example, the retaining portion is arranged parallel to and offset from the post portion. In yet a further example, at least one of the plurality of openings is a threaded opening.

In another implementation of the present disclosure, a bulkhead assembly is provided for fluidly coupling a first fluid connector to a second fluid connector. The bulkhead assembly includes a union plate that includes a plate body forming a plurality of coupler openings, the plurality of coupler openings including at least a connector opening, a first coupler opening, a second coupler opening, and a third coupler opening; a flange clamp configured to fluidly couple the first fluid connector to the union plate, the flange clamp including a clamp body having an inner surface configured to engage with the first fluid connector, the inner surface disposed along at least a portion of the connector opening; a plurality of openings formed in the clamp body, the plurality of openings including at least a first opening, a second opening, and a third opening; an extended body portion integrally formed at an outer periphery of the clamp body; a retaining portion formed in the extended body portion, the retaining portion projecting in a direction away from the extended body portion; wherein, in first configuration, the flange clamp is arranged relative to the union plate such that the retaining portion is disposed within the third coupler opening formed in the union plate, where in the first configuration the retaining portion is configured to selectively maintain an orientation of the clamp body with respect to the union plate.

In one example of this implementation, in the first configuration, the clamp body and extended body portion are located on a first side of the union plate, and the retaining portion is located at least partially on the second side of the union plate. In a second example, a fastener is inserted into the third opening formed in the retaining portion to maintain the orientation of the clamp body with respect to the union plate. In a third example, the retaining portion includes a shape having a first profile; the third coupler opening is shaped having a second profile, the first profile having a shape similar to the second profile. In a fourth example, the first profile and second profile include a triangular-shaped profile, square-shaped profile, rectangular-shaped profile, pentagonal-shaped profile, hexagonal-shaped profile, or octagonal-shaped profile. In a fifth example, the first profile and second profile include a curved profile.

In a sixth example, a second flange clamp includes a second clamp body, the second clamp body forming at least a fourth opening and a fifth opening; wherein, the flange clamp is coupled to a first side of the union plate, and the second flange clamp is coupled to a second side of the union plate; wherein, in a second configuration, the retaining portion is disposed within the third coupler opening, the first opening and fourth opening are aligned with the first coupler opening, and the second opening and the fifth opening are aligned with the second coupler opening.

In a seventh example, the first opening or the fourth opening is threaded, and the second opening or the fifth opening is threaded. In an eighth example, the first opening, the second opening, the fourth opening and the fifth opening are formed as non-threaded, clearance openings. In a ninth example, the second clamp body includes a second extended body portion, the second extended body portion including a second retaining portion; wherein, the second retaining portion is disposed within a fourth coupler opening formed in the union plate, the fourth coupler opening being spaced from the third coupler opening.

In a tenth example, the clamp body includes a first body portion and a second body portion, the first body portion being offset from the second body portion. In an eleventh example, a post portion is located between the first body portion and the second body portion. In a twelfth example, the retaining portion is arranged parallel to and offset from the post portion. In another example, the union plate includes an elongate slotted opening formed between the first coupler opening and the third coupler opening. In yet another example, in a second configuration, the retaining portion is disposed within the third coupler opening and the post portion is disposed within the elongate slotted opening. In still another example, the first opening and the second opening are formed in the first body portion, and the third opening is formed in the second body portion and the retaining portion. In a further example, in the second configuration, the first body portion is located on a first side of the union plate and the second body portion is located on a second side of the union plate, the first side and second side being opposite from one another.

In a further implementation of the present disclosure, a method of assembling a bulkhead assembly for fluidly coupling a first fluid connector to a second fluid connector includes positioning the first fluid connector on a first side of a union plate such that the first fluid connector is aligned with a connector opening formed in the union plate; aligning a first flange clamp adjacent to the first connector on the first side of the union plate; locating a retaining portion of the first flange clamp to project through a keyhole or other opening formed in the union plate; coupling a first fastener to a retaining opening formed in the retaining portion of the first flange clamp; and selectively maintaining an orientation of the first flange clamp with respect to the union plate via the coupling of the first fastener to the retaining portion.

In a first example of the present disclosure, the method includes aligning a second flange clamp on the first side of the union plate adjacent to the first flange clamp. In a second example, the coupling the first fastener includes coupling the first fastener to the retaining portion on a second side of the union plate. In a third example, the aligning the first flange clamp includes aligning at least a first opening formed in the first flange clamp with a first coupler opening formed in the union plate. In a fourth example, the method includes positioning a second flange clamp on a second side of the union plate, the second clamp flange including a second opening; aligning the second opening in the second flange clamp with a first coupler opening formed in the union plate and a first opening formed in the first flange clamp; and coupling the first flange clamp to the union plate and the second flange clamp.

In a fifth example, the coupling the first flange clamp includes inserting a fastener through the second opening and the first coupler opening and into the first opening; and threadably coupling the fastener to the first opening formed in the first flange clamp. In another example, the coupling the first flange clamp includes inserting a fastener through the first opening and the first coupler opening and into the second opening; and threadably coupling the fastener to the second opening formed in the second flange clamp. In yet another example, the coupling the first flange clamp includes inserting a fastener through the first opening, the first coupler opening and the second opening; and threadably coupling a second fastener to a threaded portion of the fastener.

In a further example, the method includes clamping the first flange clamp and the first fluid connector to the union plate; and forming a fluidly sealed connection between the first fluid connector and the union plate. In yet a further example, the method includes forming an anti-rotational connection between the first flange clamp and the union plate. In still a further example, the forming the anti-rotational connection includes disposing the retaining portion having a first shaped profile into the keyhole or other opening having a second shaped profile, the first shaped profile and the second shaped profile being the same.

### BRIEF DESCRIPTION OF THE DRAWINGS

The above-mentioned aspects of the present disclosure and the manner of obtaining them will become more apparent and the disclosure itself will be better understood by reference to the following description of the implementations of the disclosure, taken in conjunction with the accompanying drawings, wherein:
FIG. 1 is a perspective view of one example implementation of a chassis of a work machine;
FIG. 2 is a partial perspective view of the example implementation of the chassis of FIG. 1 including a bulkhead assembly with a plurality of fluid lines and connections;
FIG. 3 is a perspective view of an example implementation of a bulkhead assembly with a plurality of fluid connections;
FIG. 4 is a perspective view of a portion of the bulkhead assembly of FIG. 3;
FIG. 5A is a perspective view of an example implementation of a first side of a first flange clamp and a second flange clamp;
FIG. 5B is a perspective view of an example implementation of a second side of the first flange clamp and the second flange clamp of FIG. 5A;
FIG. 6 is a perspective view of an example implementation of a plate assembly for a bulkhead assembly;
FIG. 7 is a perspective view of an example implementation of a first flange clamp and first connector for coupling to the plate assembly of FIG. 6;
FIG. 8 is a perspective view of an example implementation of a second flange clamp for coupling to the plate assembly of FIG. 6;
FIG. 9 is a partial cross-sectional view of the second flange clamp of FIG. 8, first connector of FIG. 7, and plate assembly of FIG. 6;
FIG. 10 is a perspective view of another side of the plate assembly of FIG. 6;
FIG. 11 is another partial cross-sectional view of the second flange clamp of FIG. 8, first connector of FIG. 7, and plate assembly of FIG. 6;
FIG. 12 is a perspective cross-sectional view of the second flange clamp of FIG. 8, first connector of FIG. 7, and plate assembly of FIG. 6;
FIG. 13 is a perspective view of the plate assembly of FIG. 6 and a second connector for coupling to a bulkhead assembly;
FIG. 14 is a perspective view of an example implementation of another flange clamp assembly, the plate assembly of FIG. 6 and the second connector of FIG. 13;
FIG. 15 is a side cross-sectional view of the bulkhead assembly of FIG. 14;
FIG. 16 is a perspective view of another example implementation of a bulkhead assembly;
FIG. 17 is a perspective view of another example implementation of a bulkhead assembly;
FIG. 18 is a perspective view of another example implementation of a bulkhead assembly;
FIG. 19 is a partial perspective view of an example implementation of a plate assembly of the bulkhead assembly of FIG. 18;
FIG. 20 is a side view of an example implementation of a flange clamp of the bulkhead assembly of FIG. 18;
FIG. 21 is a perspective view of the bulkhead assembly of FIG. 18;
FIG. 22 is a flow diagram of an example implementation of assembling a bulkhead assembly;
FIG. 23 is a perspective view of another example implementation of a bulkhead assembly; and
FIG. 24 is a perspective view of an implementation of a flange clamp.

Corresponding reference numerals are used to indicate corresponding parts throughout the several views.

### DETAILED DESCRIPTION

For the purposes of promoting an understanding of the principles of the present disclosure, reference will now be made to the implementations described herein and illustrated in the drawings and specific language will be used to describe the same. It will nevertheless be understood that no limitation of the scope of the present disclosure is thereby intended, such alterations and further modifications in the illustrated devices and methods, and such further applications of the principles of the present disclosure as illustrated therein being contemplated as would normally occur to one skilled in the art to which the present disclosure relates. Terms of degree, such as "substantially," "about," "approximately," etc. are understood by those of ordinary skill to refer to reasonable ranges outside of the given value, for example, general tolerances associated with manufacturing, assembly, and use of the described implementations.

A bulkhead assembly may be found on different types of vehicles, machines, and other equipment. In some instances, the bulkhead assembly may be used for coupling a fluid connection to a structure such as a chassis or frame. For example, a first fluid line or hose may be coupled to a bulkhead assembly on a first side, while a second fluid line or hose may be coupled to an opposite side thereof.

In some implementations, a flanged clamp union is used for assembly to enable the connection between two flanged connectors. This is typically required in bulkhead applications that are necessary for modularized assembly of large work machines. The work machines may be any agricultural machine, construction machine, forestry machine, or other known work machines. In a conventional flanged clamp union, there is often a large manifold block with independent fastening hardware for connecting two connectors on both sides. During service, some of these flanged clamp unions may be disassembled from either or both sides. In other instances, a thinner mating plate may be used in place of the large manifold block. In these instances, many of the flanged clamp unions may require disassembly from both sides of the plate, rather than on only a single side of the plate.

Moreover, since both sides of the manifold block are disassembled, there is a need for space to perform the disassembly. The manifold block is often large and has a heavy mass associated therewith. In this application, there are requirements for a minimum thread length for each fastener when engaging the manifold. For this reason, the manifold is designed to be large so that the fasteners can connect on both sides thereof to satisfy standards for minimum thread engagement. In some work machines, there are one or more of these manifolds which adds weight to the work machine and thus requires more power to move the machine. This additional weight and power can increase the cost of the work machine.

One type of a flanged clamp union is with a four-bolt flange hydraulic connection. The four-bolt flange hydraulic connection is a known sealing technology with several benefits over other hydraulic sealing technologies. For example, the four-bolt flange hydraulic connection may include a lower assembly torque and higher pressure rating as compared to other technologies (e.g., O-ring face seal, 37-degree flare, etc.) when used in similar applications.

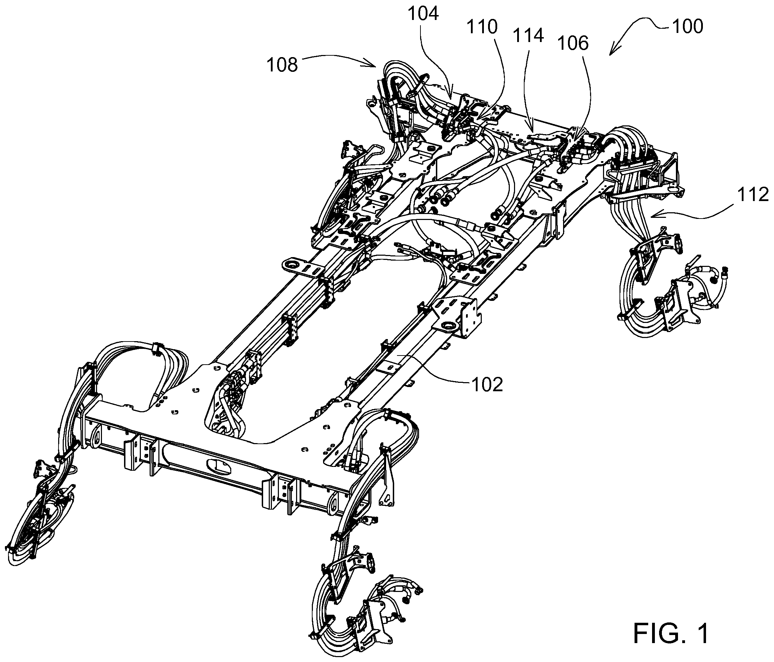

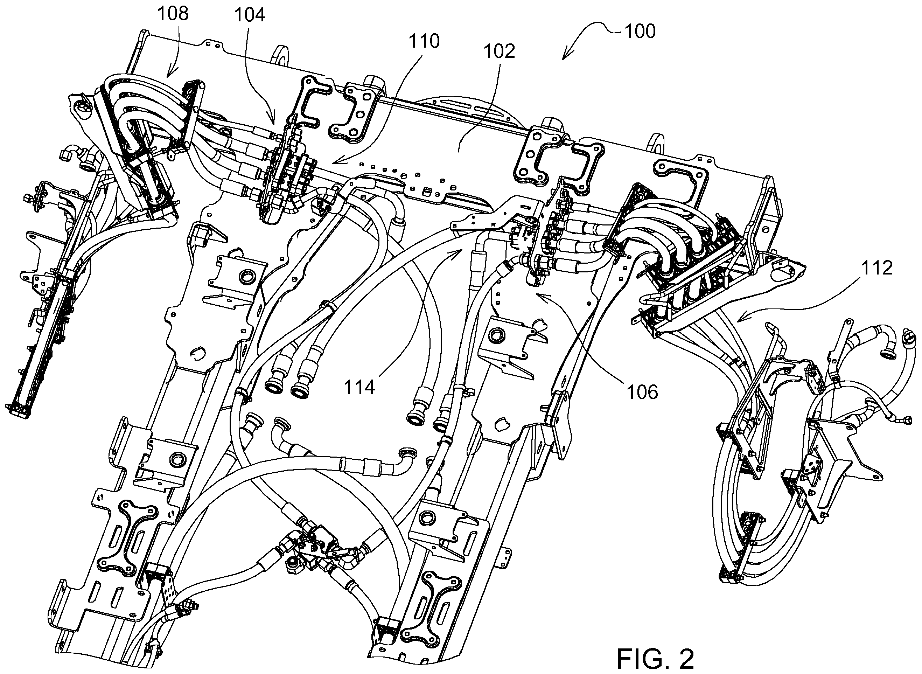

One example implementation of a four-bolt flange hydraulic connection is shown in FIGS. 1-4. Referring to FIGS. 1-2 of the present disclosure, for example, a chassis 100 of a work machine is shown. The work machine may be an agricultural machine, a construction machine, a forestry machine, and the like. The chassis 100 may form a frame body 102 to which a first flanged clamp union assembly 104 and a second flanged clamp union assembly 106 are mounted. As shown, a first plurality of fluid lines or hoses 108 are coupled to one side of the first flanged clamp union assembly 104, and a second plurality of fluid lines or hoses 110 are coupled to an opposite side thereof. A third plurality of fluid lines or hoses 112 are coupled to one side of the second flanged clamp union assembly 106, and a fourth plurality of fluid lines or hoses 114 are coupled to an opposite side thereof.

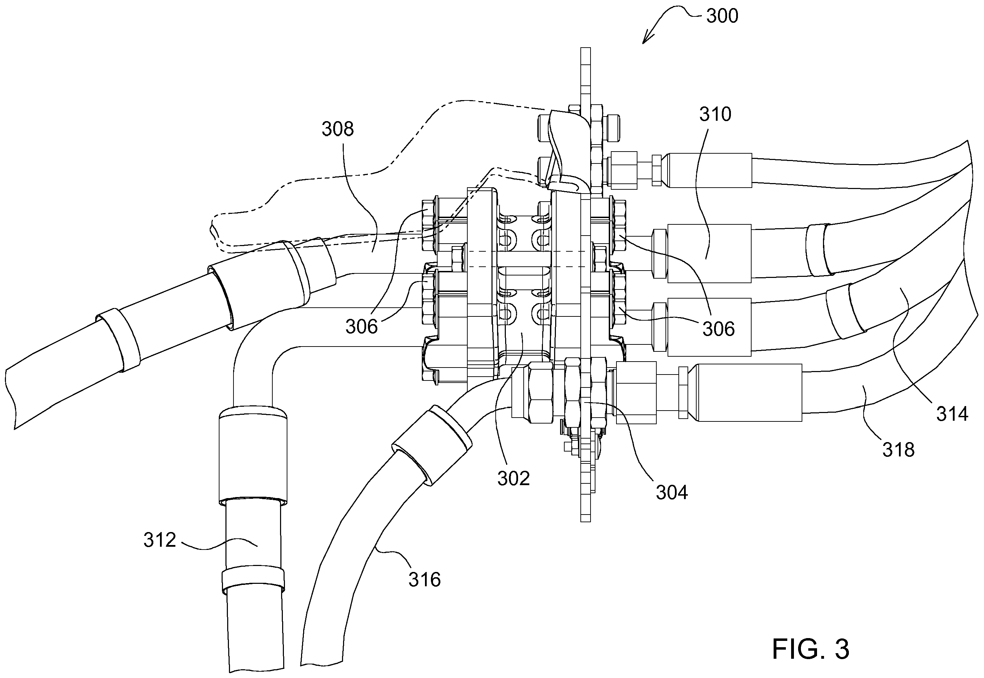

Conventional four bolt flange connections can have some drawbacks, and particularly when it comes to union mating connections in a bulkhead. Conventional four bolt flange connections require four independent bolts per connector to clamp the connection in a sealing manner. At a bulkhead union, i.e., where two fluid or plumbing connections meet, there is generally a need for at least eight fasteners (e.g., bolts, screws, etc.) and a large manifold to close the connection. An example of this is shown in FIG. 3. As shown, a four-bolt flange connection for connecting a pair of plumbing connections to a bulkhead assembly 300 is shown. Here, a large manifold 302 is formed as a casting and has a first side and a second side. A manifold plate 304 having a plurality of openings is coupled to the manifold 302. A first fluid input line 308, a second fluid input line 312, and a third fluid input line 316 are coupled to the first side of the manifold 302. A first fluid output line 310 is coupled to the opposite side of the manifold 302 such that the first fluid input line 308 is fluidly coupled to the first fluid output line 310. Similarly, a second fluid output line 314 and a third fluid output line 318 are coupled to the second side of the manifold 302. In this way, the second fluid input line 312 is fluidly coupled to the second fluid output line 314 via the manifold 302, and the third fluid input line 316 is fluidly coupled to the third fluid output line 318. A fastener 306 is shown in FIG. 3. It is to be understood there are at least four fasteners 306 for coupling the input fluid lines to the first side of the manifold 302, and there are at least four fasteners 306 for coupling the output fluid lines to the second side of the manifold 302.

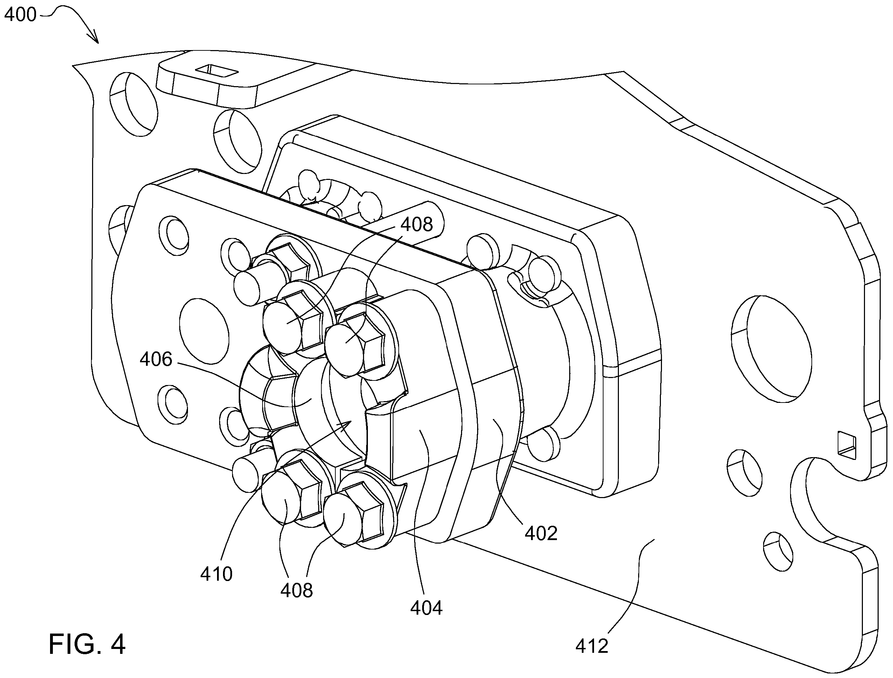

With many conventional four bolt flange connections, it is necessary to disassemble both sides of the manifold during service and/or repair operations. In the four-bolt flange connection of FIG. 4, which is an example implementation found in some work machines, it is desirable to have the ability to independently assemble and disassemble both sides of the bulkhead connection. The independent assembly may be required for both service applications as well as during production assembly when it can be difficult to make the final assembly on both sides of the bulkhead at the same time.

In the example implementation of FIG. 4, for example, a bulkhead assembly 400 may include a manifold 402 and a manifold plate coupled thereto. In many conventional four bolt flange connections, the manifold forms the sealing face for the different fluid connectors. On the side of the manifold shown in FIG. 4, a first flange clamp 404 and a second flange clamp 406 are shown coupled to the manifold via a plurality of fasteners 408. In this implementation, there are four fasteners 408 shown, where two fasteners 408 couple the first flange clamp 404 to the manifold 402 and the other two fasteners 408 couple the second flange clamp 406 to the manifold 402. An opening 410 is formed between the first and second flange clamps in which a fluid connector (not shown) may be coupled.

In FIG. 4, the first flange clamp 404 and the second flange clamp 406 include at least one opening for a fastener 408 to couple the flange clamp to the manifold 402. As shown, in this example implementation, each flange clamp includes at least two openings for a pair of fasteners 408 to couple the corresponding flange clamp to the manifold. In this example, each flange clamp is independently coupled to the manifold via the fasteners 408. Moreover, each flange clamp forms part of the opening 410 to which the fluid connector is coupled.

The present disclosure provides one or more additional example implementations of flanged hydraulic bulkhead plumbing connections required for modular assembly to work machines. In these example implementations, the large manifold is removed to help reduce cost. Moreover, independent flange mounting hardware and multiple final assembly torque application operations can be eliminated. To do so, the present disclosure discloses one or more example implementations of a flanged clamp union for sequenced assembly to a work machine (e.g., to the chassis of the work machine). The one or more example implementations of flange clamp unions can maintain the ability to secure the hydraulic or fluid connectors to either side of the bulkhead assembly at different times, i.e., independent coupling, as may be required by a production line assembly or service operation. In other words, the one or more example implementations may allow coupling of the flange clamp union connections on one side independent of the flange clamp union connections on the opposite side.

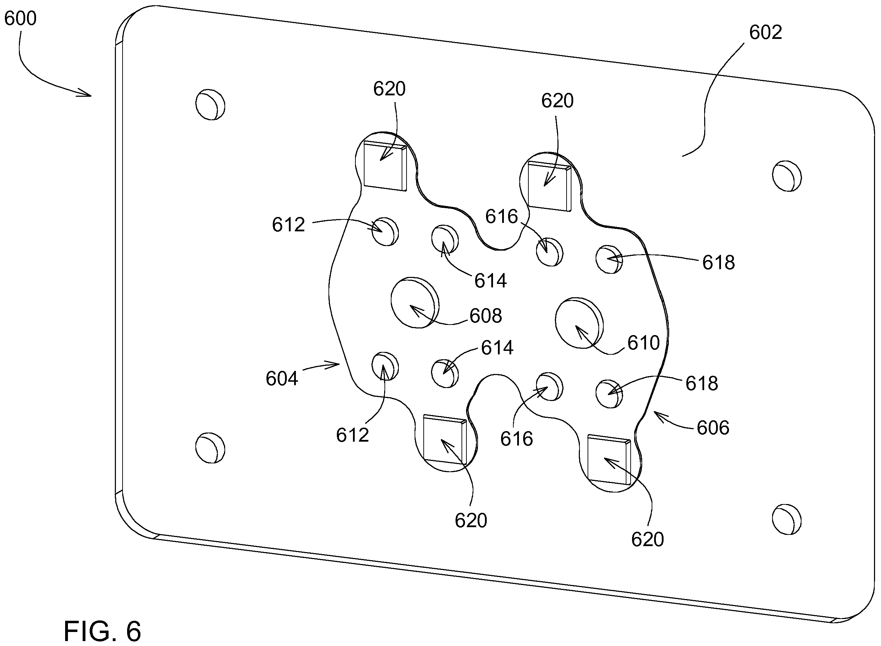

Further, in the one or more example implementations of flange clamp unions, a bulkhead union plate (e.g., manifold plate or plate assembly) may include one or more additional openings which may be used for an in-process retention function to loosely secure the flange clamp and retained fluid connector in place on one side of the plate assembly until final assembly. The additional one or more openings in the plate assembly may be shaped and sized to receive a keying projection portion on a flange clamp. This is shown best and will be described in further detail with regards to FIG. 6. Thus, in the one or more example implementations of new flange clamp unions described herein, each bulkhead assembly may include a bulkhead union plate or plate assembly that forms the sealing surface on both sides thereof as well as one or more flange clamps that may be directly coupled to the plate assembly during assembly.

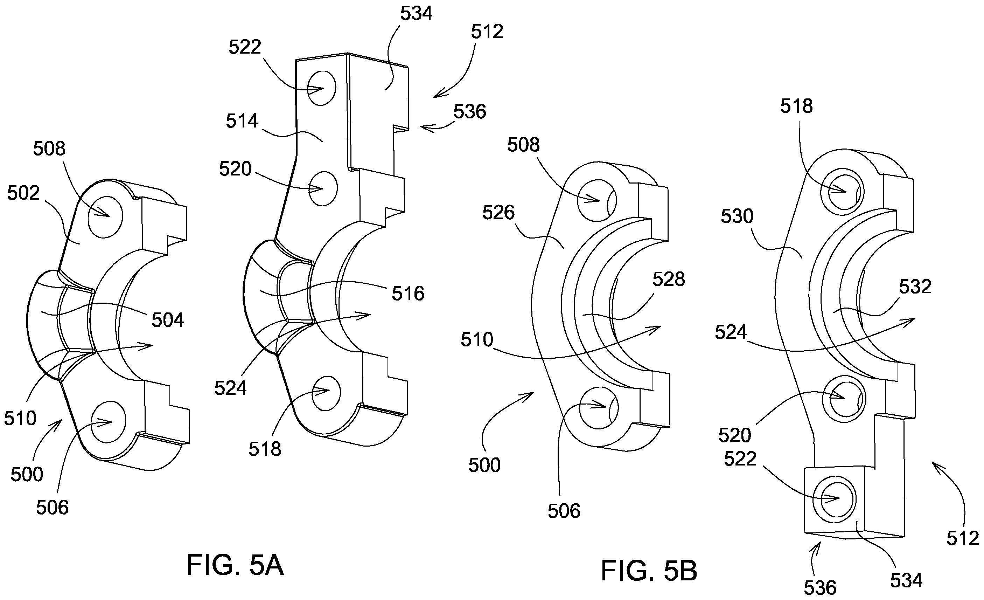

Referring to FIGS. 5A and 5B, a pair of flange clamps are illustrated. On the left side of FIGS. 5A and 5B, a first flange clamp 500 is shown. In FIG. 5A, a first side of the first flange clamp 500 is shown, and in FIG. 5B a second and opposite side thereof is shown. The first flange clamp 500 may be a standard or conventional flange clamp similar to the first flange clamp 404 and second flange clamp 406 of FIG. 4. Here, the first flange clamp 500 includes a clamp body 502 having a generally arced, curved, or semi-circular shape. The clamp body 502 may include a first opening 506 located near a first end and a second opening 508 located near an opposite end thereof. The first opening 506 and second opening 508 may be clearance or through openings. The clamp body 502 may include a raised portion 504 located between the first opening 506 and the second opening 508. The overall shape of the first flange clamp 500 forms a portion of a connector opening 510. When assembled to a bulkhead assembly, the first flange clamp 500 may be paired with another flange clamp similar to the first flange clamp 500 to form the connector opening 510.

In FIG. 5B, the first flange clamp 500 includes a second side 526 of the clamp body 502. On the second side 526 thereof, the clamp body 502 includes a recessed portion 528. The recessed portion 528 is arcuate or rounded in shape. In some examples, the recessed portion 528 may be semicircular. In other implements, the recessed portion 528 may be curved less than 180°. In any event, a flange portion of a fluid connector may be disposed in the recessed portion 528 when mounted to a plate assembly, as will be described in further detail below. When the first flange clamp 500 is securely tightened to the plate assembly, the fluid connector may be fluidly and sealingly coupled to the plate assembly.

As noted above, the first flange clamp 500 in FIGS. 5A and 5B is similar to a conventional or standard flange clamp shown in FIG. 4. As also shown, however, is one example implementation of a second flange clamp 512. In FIG. 5A, the second flange clamp 512 may include a first side of a clamp body 514, and an opposite side 530 thereof is shown in FIG. 5B. The clamp body 514 of the second flange clamp 512 may include a first opening 518 and a second opening 520. A raised portion 516 of the clamp body 514 may be provided at a location between the first opening 518 and the second opening 520. In addition, the shape of the second flange clamp 512 may partially form a connector opening 524. In other words, a connector may be disposed in a connector opening 524 that is at least partially formed by the second flange clamp 512.

The second flange clamp 512 may include a recessed portion 532 on the second side 530 of the clamp body 514. As shown in FIG. 5B, the recessed portion 532 may be semicircular. In other implements, the recessed portion 532 may have a curvature less than 180°. In other implementations, the recessed portion 532 may have a curvature of 180° or greater. In any event, a flange portion of a fluid connector may be disposed in the recessed portion 532 when mounted to a plate assembly, as will be described in further detail below. When the second flange clamp 512 is securely tightened to the plate assembly, the fluid connector may be fluidly and sealingly coupled to the plate assembly.

As further shown in FIGS. 5A and 5B, the second flange clamp 512 may include an extended body portion 536. The extended body portion 536 extends past the second opening 520 and forms a third opening 522 therein. As also shown, the extended body portion 536 may form a projecting portion 534. The second flange clamp 512 may be disposed in a plane, and the projecting portion 534 projects from the extended body portion 536 in a direction that is substantially perpendicular to the plane. In FIG. 5A, the projecting portion 534 may project into the page. The projecting portion 534 may be better seen in FIG. 5B. In any event, in one implementation, the first opening 518, the second opening 520, and the third opening 522 may be substantially parallel to one another. In other implementations, at least two of the three openings may be parallel to one another.

As best shown in FIG. 5B, the projecting portion 534 of the second flange clamp 512 may have a square-like shape. In another implementation, the projecting portion 534 may form a hexagonal shape. In yet another implementation, the projecting portion 534 may include an oval-like shape or any shape with three or more sides. In one implementation, the projecting portion 534 forms an anti-rotational feature. In this implementation, the projecting portion 534 may include at least one substantially flat side. In other implementations, the projecting portion 534 may include at least two substantially flat sides. In some implementations, the projecting portion 534 may include three or more substantially flat sides. In several implementations, the projecting portion 534 may form an elongated oval-like design. The number of flat sides and overall shape of the projecting portion 534 is not intended to be limited to that shown in FIGS. 5A-17.

In another implementation, the second flange clamp 512 may include a second projecting portion 534 (not shown). In this implementation, the second flange clamp 512 may include a pair of projecting portions. The location of each projecting portion relative to the other projecting portion may not be limited. In other words, in FIG. 5A, a first extended body portion 536 may be located adjacent the second opening 520 and a second extended body portion 536 may be located adjacent the first opening 518, where each of the first and second extended body portions 536 include a projecting portion 534. When a flange clamp includes two or more extended body portions that have a corresponding projecting portion, each of the corresponding projecting portions may be circular, triangular, square, rectangular, oval, pentagonal, hexagonal, octagonal, etc. With two or more projecting portions, the flange clamp may be held relatively stationary without rotating.

Besides providing an anti-rotational feature, the projecting portion 534 may also be aligned with a corresponding sized hole or opening in the plate assembly to assist with aligning the flange clamp to the plate assembly. When a fastener is coupled to the third opening 522 in the extended body portion 536, the flange clamp 512 may be coupled and aligned with the plate assembly as will be described in further detail below. However, the flange clamp 512 may not fluidly seal the flange portion of the fluid connector to the plate assembly by only coupling the fastener to the projecting portion 534.

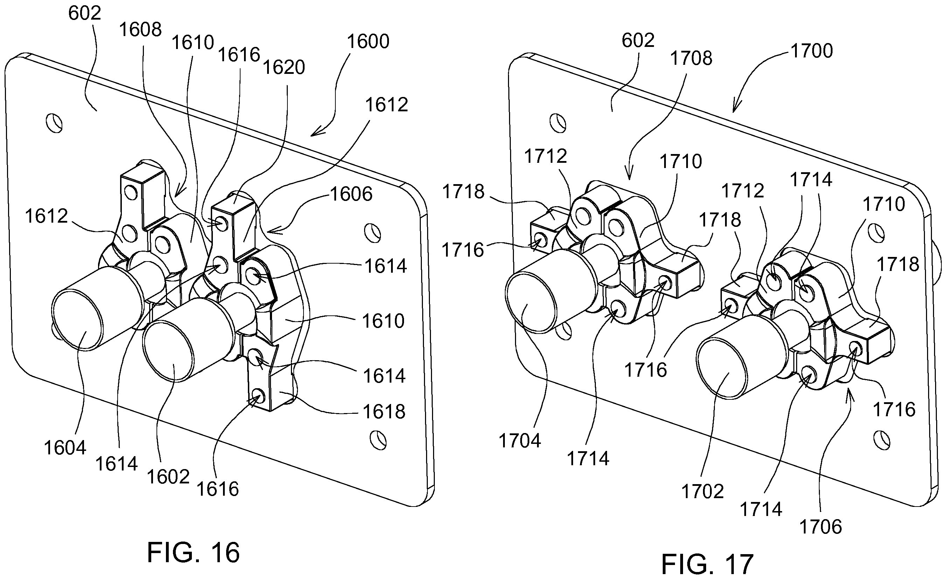

Further, the extended body portion 536 is shown in FIGS. 5A and 5B to be offset vertically from the remainder of the clamp body 514 of the first flange clamp 512. This is only one implementation. In other implementations, the extended body portion 536 may be disposed offset horizontally (e.g., Fig. 17) or at an angle relative to the rest of the clamp body 514. Thus, the orientation or position of the extended body portion 536 may vary in different implementations.

As noted above, the projecting portion 534 of the second flange clamp 512 assists with alignment and anti-rotation. With respect to alignment, the projecting portion 534 may be disposed within a corresponding opening in the plate assembly in a similar fashion as a key fits into a key slot. Referring, for example, to FIG. 6 of the present disclosure, a union plate 600 is shown. The union plate 600 may be formed as a plate body 602 with a plurality of defined openings therein. In the implementation of FIG. 6, the union plate 600 is arranged such that a first connector opening 608 is defined at a first connector location 604 and a second connector opening 610 is defined at a second connector location 606. Each of the first and second connector openings are defined in the union plate 600. In other implementations, the union plate 600 may include only a single connector opening. In other implementations, the union plate 600 may include a plurality of connector openings.

In the implementation of FIG. 6, for each connector opening, the plate 600 may include corresponding openings for a pair of flange clamps on each side thereof. For instance, the union plate 600 may include a first plurality of openings 612 for a first flange clamp (not shown) and a second plurality of openings 614 for a second flange clamp (not shown). In this example, the first flange clamp and second flange clamp may couple a first connector to the first connector location 604 on one side of the union plate 600. Similarly, the union plate 600 may include a third plurality of openings 616 for a third flange clamp (not shown) and a fourth plurality of openings 618 for a fourth flange clamp (not shown). In this example, the third flange clamp and fourth flange clamp may couple a second connector to the second connector location 606 on one side of the union plate 600. As also shown in the implementation of FIG. 6, the union plate 600 may include one or more key openings 620 for receiving the projecting portion 534 of a corresponding flange clamp 512. A shown, the key opening 620 may be sized and shaped based on the corresponding size and shape of the projecting portion 534. While each key opening 620 in FIG. 6 has a square shape, it is to be understood the key opening 620 may include any known shape including circular, oval, triangular, square, rectangular, pentagonal, hexagonal, octagonal, etc. In some implementations, the key opening 620 may be sized just large enough for a press-fit type connection with the projecting portion 534. In other implementations, the key opening 620 may be over-sized compared to the projecting portion 534.

In several implementations, the placement of fasteners through the third opening 522 in the extended body portion 536 of the flange clamp 512 and the key opening 620 of the union plate may not seal the fluid connector to the face of the plate body 602. In other implementations, the placement of fasteners through the third opening 522 in the extended body portion 536 of the flange clamp 512 and the key opening 620 of the union plate may seal the fluid connector to the face of the plate body 602. In some implementations, the fluid connector (not shown) may be fluidly sealed to the face of the plate body 602 when fasteners are securely fastened when inserted through the first opening 518 and second opening 520. In yet other implementations, the fluid connector (not shown) may be fluidly sealed to the face of the plate body 602 when at least one fastener is securely fastened when inserted through either the first opening 518 or the second opening 520.

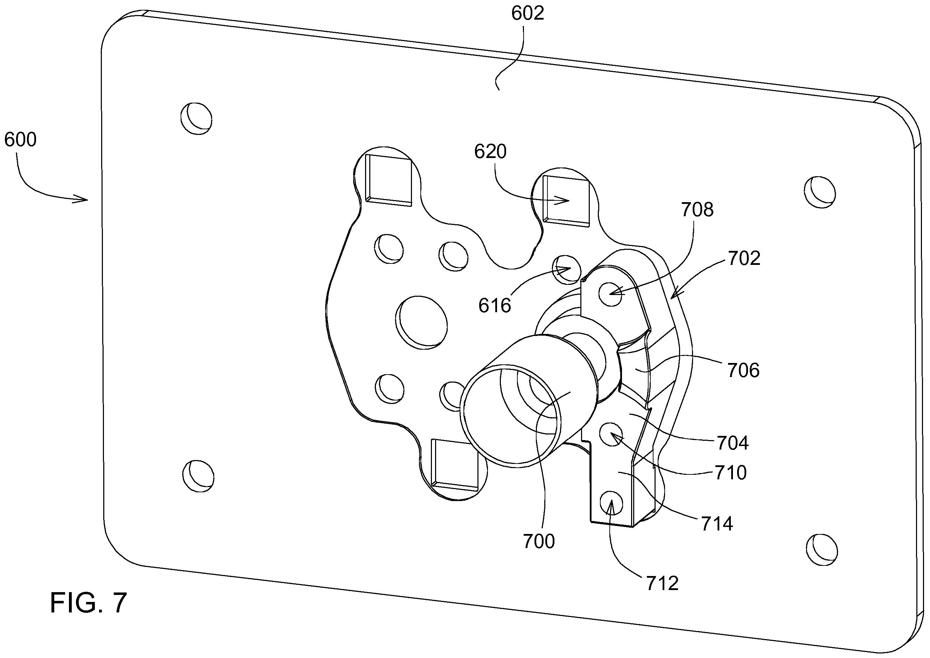

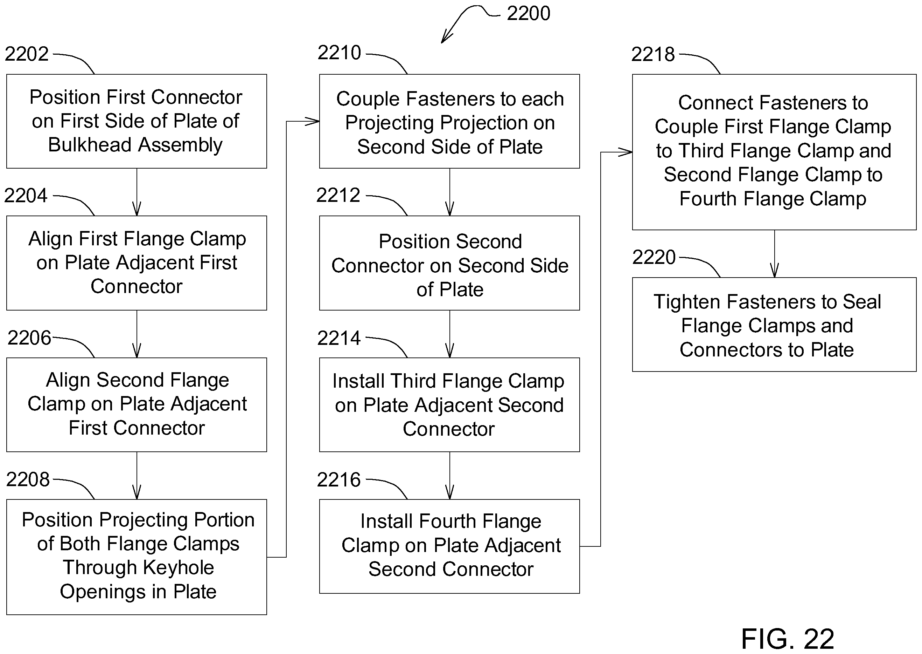

In FIG. 22, an example implementation of assembling a bulkhead assembly is illustrated. To facilitate the assembly process, FIGS. 7-15 of the present disclosure provide an example implementation that illustrates one or more steps in the assembly process. Before describing the process, it is to be understood that the different blocks shown in FIG. 22 are not intended to represent a sequential order of the assembly process. It is to be understood that the present disclosure is not limited to the order in which the blocks in FIG. 22 are arranged, but rather in some implementations one or more of the blocks in FIG. 22 may be omitted. In other implementations, there may be one or more additional blocks for executing the assembly process. In yet another implementation, the blocks in FIG. 22 may be arranged in a different order. Thus, the arrangement of blocks in FIG. 22 is intended to represent only one example implementation of the process for assembling a bulkhead assembly on a work machine, and there may be a plurality of ways the blocks in FIG. 22 may be executed including with fewer blocks being executed, additional blocks being executed, or the blocks being executed in different orders.

In any event, referring to FIG. 22, the example implementation of the assembly process 2200 may be executed at block 2202 in which a first fluid connector 700 is positioned on a first side of a union plate 600. As shown in FIG. 7, the union plate 600 of FIG. 6 is provide as an example implementation of a union plate to be used in a bulkhead assembly. The union plate 600 may include the plurality of openings and keyhole openings as shown in FIG. 6. For purposes of this disclosure, a keyhole opening may be an opening have a size and shape configured to receive a correspondingly sized and shaped body or structure. As described as one example in this disclosure, a keyhole opening includes a size and shape configured to receive a projecting portion of a flange clamp. In other examples, a keyhole opening may receive other bodies or structures disclosed herein. The first fluid connector 700 in FIG. 7 may be any standard connector capable of being coupled to a fluid line, hose, or cable. The first fluid connector 700 may be positioned in contact with the face of the plate body 602 as shown in FIG. 7. Moreover, the first fluid connector 700 may include a defined passageway through which fluid flows therethrough. Thus, when positioning the first fluid connector 700 in contact with the face of the plate body 602, the passageway of the first fluid connector 700 may be aligned with first connector opening 610. In this manner, fluid may flow through the first fluid connector 700 and the first connector opening 610 to the other side of the union plate 600.

Once the fluid connector 700 is arranged on the union plate 600, the process 2200 may advance to block 2204 in which a first flange clamp 702 may be aligned on the union plate 600 adjacent to the fluid connector 700. The first flange clamp 702 may be structurally similar to the second flange clamp 512 of FIGS. 5A-5B. As shown in FIG. 7, the first flange clamp 702 may include a clamp body 704 having a raised portion 706 located between a first opening 708 and a second opening 710. In some implementations, the first opening 708 and second opening 710 may be threaded openings. In other implementations, the first opening 708 and second opening 710 may be clearance or through-hole openings. In yet other implementations, one of the two openings may be a threaded opening and the other a non-threaded opening.

The first flange clamp 702 may include an extended body portion 714 as shown. The extended body portion 714 may include a projecting portion (not shown as it is disposed within a keyhole opening in the union plate 600). The extended body portion 714 may define a third opening 712 as shown. A fastener (not shown) may be inserted into the third opening 712 to secure the first flange clamp 702 to the union plate 600. To do so, the projecting portion (not shown) may be inserted through the keyhole opening 620 in the union plate 600 and a fastener may be secured on the opposite side of the union plate to retain the first flange clamp 702 to the union plate 600. As described above, the projecting portion may be shaped and sized to fit in the keyhole opening 620. Depending on the shape and size of both the projecting portion and the keyhole opening, the projecting portion may function as an anti-rotational feature or portion of the first flange clamp 702.

As the first flange clamp 702 is positioned on the union plate 600, the clamp body 704 may include a recessed portion on an opposite side thereof similar to the recessed portion 532 in FIG. 5B. A flange portion of the fluid connector 700 may be disposed within the recessed portion of the clamp body 704 to partially hold the fluid connector 700 in place and in contact or proximate contact with the union plate 600.

Moreover, as the first flange clamp 702 is positioned on the union plate 600, the first opening 708 and second opening 710 may be aligned with the fourth plurality of openings 618 formed in the union plate 600. As will be described, fasteners may be connected through the fourth plurality of openings 618 to couple the first flange clamp 702 to the union plate 600.

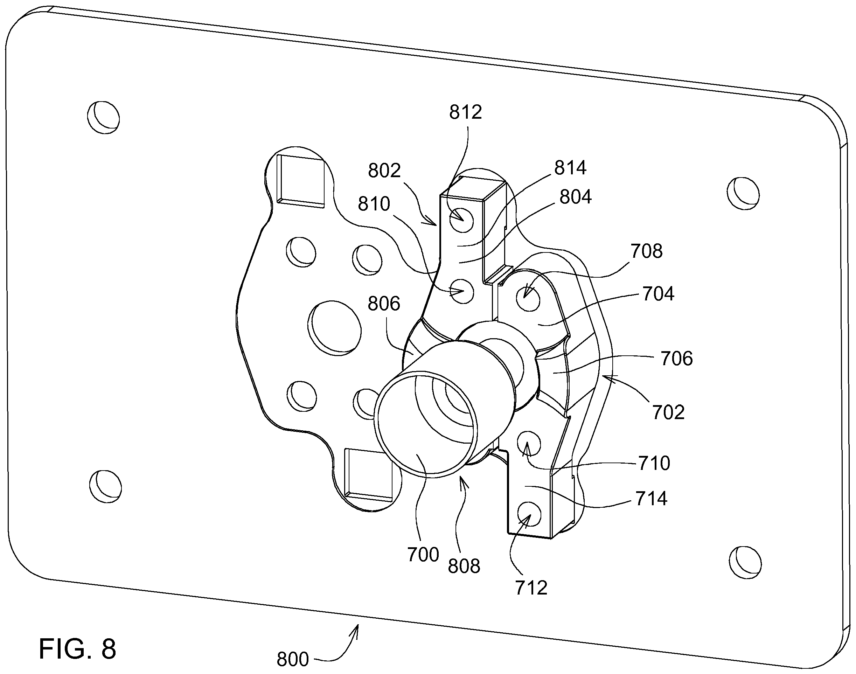

Once the first flange clamp 702 is aligned on the union plate 600, the process 2200 of FIG. 22 may advance to block 2206 whereby a second flange clamp 802 may be coupled to a first side 800 of the union plate 600. The second flange clamp 802 may be structurally similar to the second flange clamp 512 of FIGS. 5A-B and the first flange clamp 702 of FIG. 7. As shown in FIG. 8, the second flange clamp 802 may include a clamp body 804 having a raised portion 806 located between a first opening 808 and a second opening 810. In some implementations, the first opening 808 and second opening 810 may be threaded openings. In other implementations, the first opening 808 and second opening 810 may be clearance or through-hole openings. In yet other implementations, one of the two openings may be a threaded opening and the other a non-threaded opening.

The second flange clamp 802 may include an extended body portion 814 as shown. The extended body portion 814 may include a projecting portion (not shown as it is disposed within a keyhole opening in the union plate 600). The extended body portion 814 may define a third opening 812 as shown. A fastener (not shown) may be inserted into the third opening 812 to secure the second flange clamp 802 to the union plate 600. To do so, the projecting portion (not shown) may be inserted through the keyhole opening 620 in the union plate 600 and a fastener may be secured on the opposite side of the union plate to retain the second flange clamp 802 to the union plate 600. As described above, the projecting portion may be shaped and sized to fit in the keyhole opening 620. Depending on the shape and size of both the projecting portion and the keyhole opening, the projecting portion may function as an anti-rotational feature or portion of the second flange clamp 802.

As the second flange clamp 802 is positioned on the union plate 600, the clamp body 804 may include a recessed portion on an opposite side thereof similar to the recessed portion 532 in FIG. 5B. A flange portion of the fluid connector 700 may be disposed within the recessed portion of the clamp body 804 to partially hold the fluid connector 700 in place and in contact or proximate contact with the union plate 600.

Moreover, as the second flange clamp 802 is positioned on the union plate 600, the first opening 808 and second opening 810 may be aligned with the third plurality of openings 616 formed in the union plate 600. As will be described, fasteners may be connected through the third plurality of openings 616 to couple the second flange clamp 802 to the union plate 600.

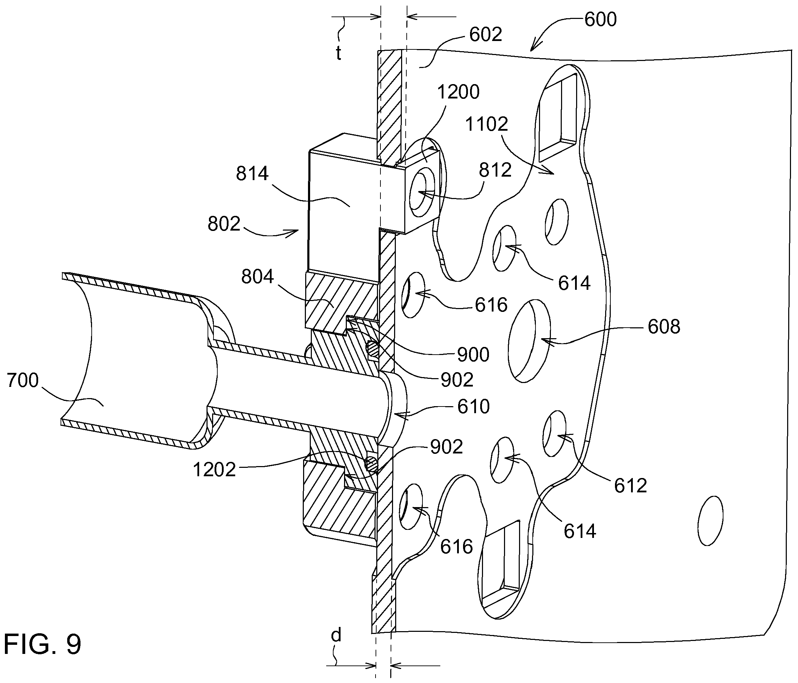

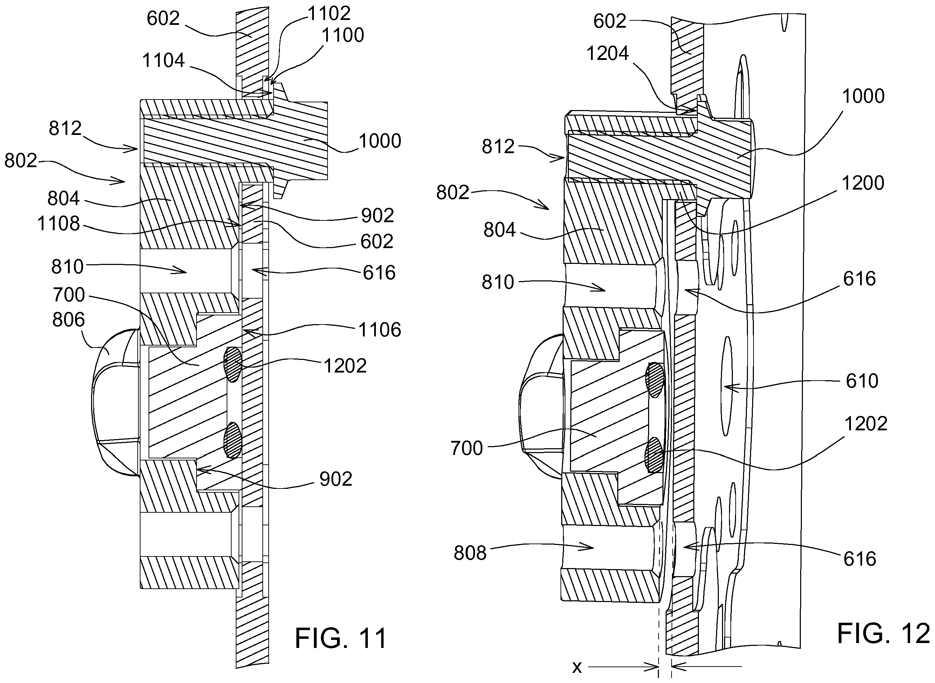

Referring to FIG. 9 of the present disclosure, a portion of the second flange clamp 802 is shown coupled to the union plate 600. As shown, the passageway defined in the fluid connector 700 is axially aligned with the connector opening 610, and the first opening 808 and second opening 810 are aligned with the third plurality of openings 616 formed in the union plate 600. In the example implementation of FIG. 9, the union plate 600 is shown in a forwardmost position relative to the second flange clamp 802 in the sense that the face of the plate body 602 is in close proximity with a face of the second flange clamp 802. In this implementation, and as shown in FIGS. 9 and 11 of the present disclosure, an inner face or surface 902 of the second flange clamp 802 is shown in contact with a surface of the flange portion of the connector 700. When fasteners are used to securely tighten the second flange clamp 802 to the flange portion of the connector 700, the position of the second flange clamp 802 relative to the union plate 600 is shown in FIGS. 9 and 11. In this position, the second flange clamp 802 forms a recessed portion 900 in which the flange portion of the fluid connector 700 is disposed, and the flange portion of the fluid connector 700 is sealingly coupled to the union plate 600.

In FIG. 9, the second flange clamp 802 is shown having a projecting portion 1200 formed at the extended body portion 814. The projecting portion 1200 may project through the keyhole opening 620 formed in the union plate 600. As shown, the projecting portion 1200 projects a distance "t" from the inner face 902 of the second flange clamp 802. As also shown, the union plate 600 may have a thickness "d". In one example implementation, the distance "t" is greater than the thickness "d." In one example implementation, the distance "t" is twice the thickness "d." In a second example implementation, the distance "t" is at least twice the thickness "d." In another example implementation, the distance "t" is at least three times the thickness "d." In yet another example implementation, the distance "t" is approximately the same as the thickness "d." In a further example implementation, the distance "t" is less than the thickness "d." In the illustrated implementation of FIG. 9, the projecting portion 1200 has a distance "t" that is greater than the plate thickness "d" and therefore extends through the keyhole opening 620 and past a first plate surface 1102 of the union plate 600. Here, the projecting portion 1200 protrudes just far enough past the first plate surface 1102 to enable the second flange clamp 802 and fluid connector 700 to be retained in place with the union plate 600 without sealing the fluid connector 700 to the union plate 600. In this arrangement, block 2208 of the assembly process 2200 is complete.

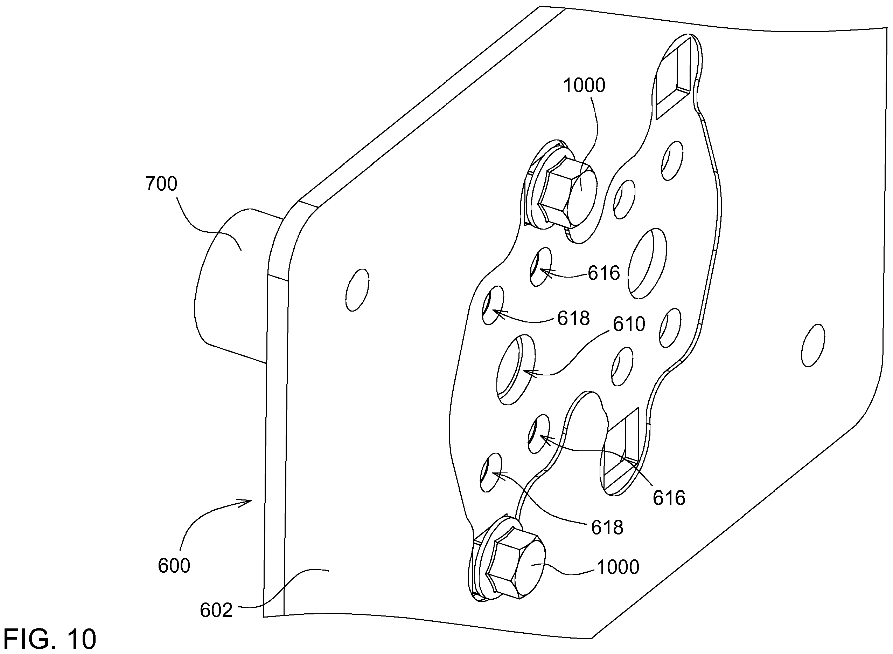

Once block 2208 is complete, the process 2200 may advance to block 2210 where one or more fasteners may be coupled to the projecting portions of the first flange clamp 702 and the second flange clamp 802. In FIG. 10 of the present disclosure, one or more fasteners 1000 may be coupled to the projecting portions 1200 on a second side of the union plate 600.

As shown in FIGS. 11 and 12, a fastener 1000 may be coupled to the projecting portion 1200 of the second flange clamp 802 and the union plate 600 at a connection location 1204. In FIG. 11, due to the distance "t" of the projecting portion 1200 being greater than the plate thickness "d" (as shown in FIG. 9), a gap 1100 may be defined between a surface 1104 of a flange portion of the fastener 1000 and the first plate surface 1102. Due to the gap 1100, secure tightening of the fastener 1000 to the projecting portion 1200 may not bias the clamping of the remaining fasteners (not shown) to the second flange clamp 802. In other words, when the fastener 1000 is coupled to the projecting portion 1200, the second flange clamp 802 does not seal against the union plate 600. As shown in FIG. 11, a second plate surface 1108 of the union plate 600 is just offset or displaced (i.e., not in contact with) from the inner face 902 of the second flange clamp 802 and a surface 1106 of the fluid connector 700. In one implementation, the surface 1106 of the fluid connector 700 (and, in some implementations, the inner face 902 of the second flange clamp 802) may be in contact with the second plate surface 1108, but it is not sealed in this implementation.

In FIG. 11 of the present disclosure, the second flange clamp 802 is shown in a configuration in which the flange portion of the connector 700 is disposed in a fluidly sealing connection with the union plate 600. As will be described below, for this position to be achieved, fasteners will be secured through the first and second openings 808, 810, respectively, of the second flange clamp 802. In a sealed position, an o-ring or seal 1202 may be disposed within the passageway of the fluid connector 700. The o-ring or seal 1202 may be compressed between the flange portion of the fluid connector 700 and the second plate surface 1108 of the union plate 600. In this implementation, the second flange clamp 802 may be spaced from the second plate surface 1108 of the union plate 600 such that in the sealed configuration, the flange portion of the connector 700 is sealed against the union plate 600.

In FIG. 12 of the present disclosure, the flange portion of the connector 700 is not fluidly sealed against the second surface 1108 of the union plate 600. Instead, the surface 1104 of the flange portion of the fastener 1000 is shown in contact with the first plate surface 1102 of the union plate 600. In this implementation, the first plate surface 1102 of the union plate 600 is spaced from the second flange clamp 802 by a second gap, x. In other words, a second gap, x, is defined between the union plate 600 and the second flange clamp 802 in FIG. 12. The height of the o-ring or seal 1202, however, may be greater than the second gap, x. This greater height of the seal 1202 allows the seal 1202 to maintain its position as shown in FIG. 12 without moving therefrom. In some implementations, the height of the seal 1202 may be greater than a difference between the distance, t, and the thickness of the union plate 600.

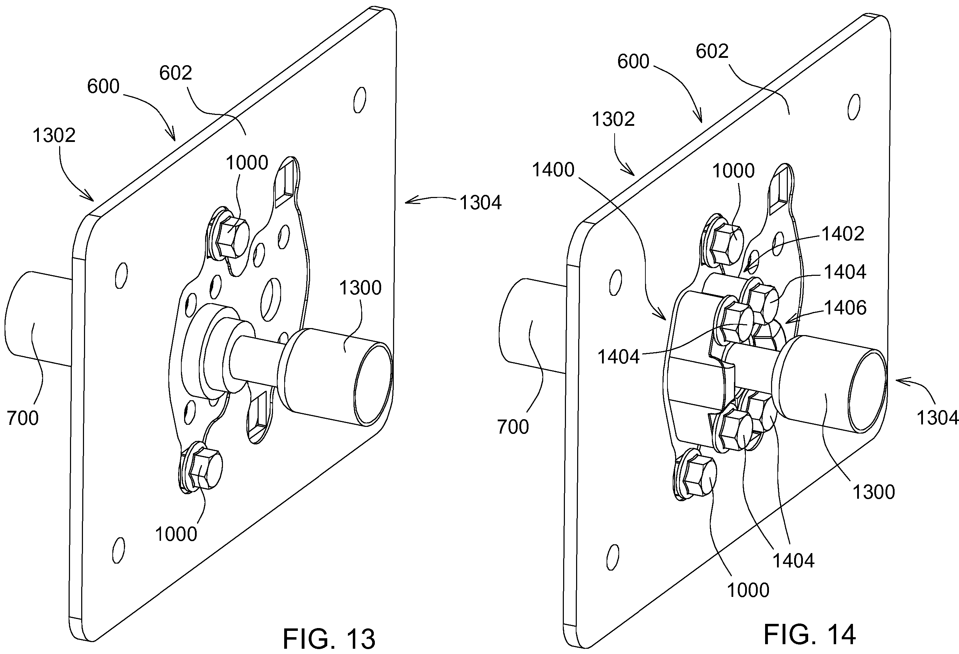

In block 2212 of the assembly process 2200 of FIG. 22, a second fluid connector may be positioned on the second side of the union plate 600 opposite the first fluid connector. As shown in FIG. 13, the first fluid connector 700 is disposed on a first side 1302 of the union plate 600 and a second fluid connector 1300 is positioned on a second side 1304 thereof. The second fluid connector 1300 in FIG. 13 may be any standard connector capable of being coupled to a fluid line, hose, or cable. The second fluid connector 1300 may be positioned in contact with the face of the plate body 602 as shown in FIG. 13. Moreover, the second fluid connector 1300 may include a defined passageway through which fluid flows therethrough. Thus, when positioning the second fluid connector 1300 in contact with the face of the plate body 602, the passageway of the second fluid connector 1300 may be aligned with first connector opening 610. In this manner, fluid may flow through the first fluid connector 700, the first connector opening 610 and to the other side of the union plate 600 where it flows through the second fluid connector 1300.

Once the second fluid connector 1300 is arranged on the union plate 600, the process 2200 may advance to blocks 2214 and 2216 in which a third flange clamp and a fourth flange clamp may be installed and aligned on the union plate 600 adjacent to the second fluid connector 1300. Referring to the example implementation of FIG. 14, for example, a third flange clamp 1400 and a fourth flange clamp 1402 are shown. In this implementation, the third flange clamp 1400 and the fourth flange clamp 1402 may be structurally similar to one another. In other implementations, the third flange clamp 1400 and the fourth flange clamp 1402 may be structurally dissimilar to one another. In yet another implementation, the third flange clamp 1400 and the fourth flange clamp 1402 may be structurally similar to the first flange clamp 500 of FIGS. 5A-5B. In a further implementation, the third flange clamp 1400 and the fourth flange clamp 1402 may be structurally similar to the first flange clamp 702 and second flange clamp 802 shown in FIGS. 7 and 8, respectively. In several implementations, the third flange clamp 1400 and the fourth flange clamp 1402 may be conventional, "off-the-shelf" flange clamps. In other implementations, the third flange clamp 1400 and the fourth flange clamp 1402 may be structurally designed for connecting with the first flange clamp 702 and second flange clamp 802.

In the illustrated implementation of FIG. 14, the third flange clamp 1400 and the fourth flange clamp 1402 may be structurally similar to the first flange clamp 500 of FIGS. 5A-5B. In the third flange clamp 1400 and the fourth flange clamp 1402, each flange clamp may include a first opening and a second opening similar to the first opening 506 and second opening 508 of FIG. 5A. In one implementation, the pair of openings in the third flange clamp 1400 and the fourth flange clamp 1402 may be clearance openings, i.e., threadless openings. In another implementation, the pair of openings in the third flange clamp 1400 and the fourth flange clamp 1402 may be threaded openings.

The third flange clamp 1400 and the fourth flange clamp 1400 may be arranged adjacent to the second fluid connector 1300. In one implementation, the third and fourth flange clamps may include a clamp body (e.g., the clamp body 502) having a recessed portion (e.g., the recessed portion 528). In this implementation, the recessed portion may be arranged such that a flange portion of the second fluid connector 1300 may be disposed therein when mounted to the union plate 600.

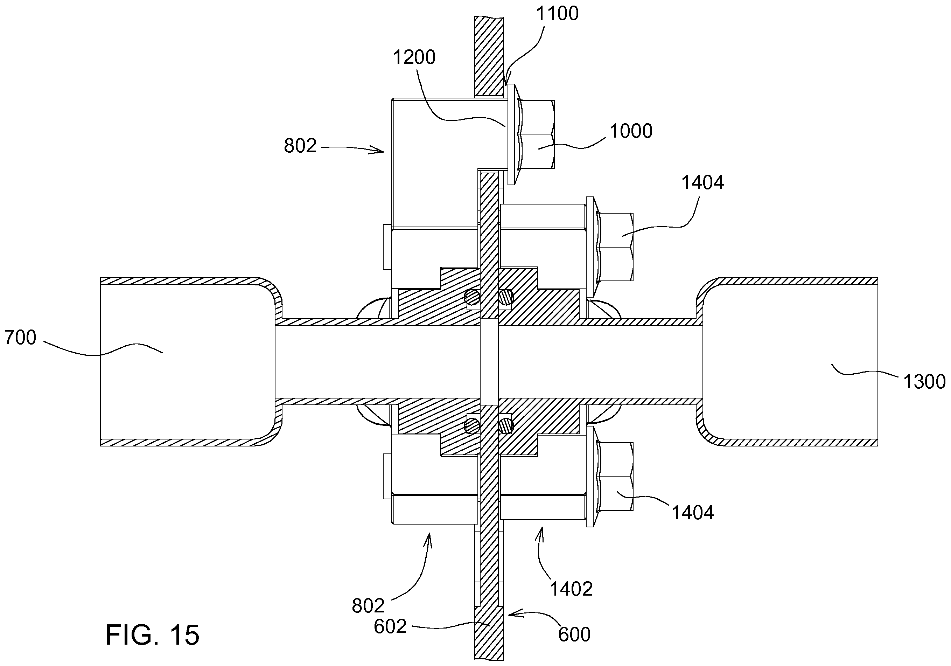

Once the third and fourth flange clamps are positioned on the union plate 600 and their corresponding first and second openings are aligned with the third plurality of openings 616 and fourth plurality of openings 618 in the union plate 600, the assembly process 2200 of FIG. 22 can advance to block 2218. In block 2218, fasteners may be used to couple the first flange clamp to the third flange clamp and the second flange clamp to the fourth flange clamp. Referring to FIG. 14, for example, a plurality of fasteners (e.g., bolts, screws, etc.) 1404 may be used for coupling the first flange clamp 702 to the third flange clamp 1400 and the second flange clamp 802 to the fourth flange clamp 1402. In assembly process 2200 of FIG., 22 the fasteners 1404 may be tightened in block 2220 to seal the flange clamps to the union plate 600, compress the seal 1202, and fluidly coupling the first fluid connector 700 and the second fluid connector 1300 in a sealing manner to the union plate and with one another. As the fasteners 1404 are tightened in block 2220, the flange clamps may be disposed in a secured position 1406 with the union plate 600 as best shown in FIG. 15.

As shown in FIG. 15, when the fasteners 1404 are tightened and the flange clamps move to the secured position 1406, the union plate 600 may be moved away from the surface 1104 of the fastener 1000. As this happens, the gap 1100 is present between the union plate 600 and the surface 1104 of the fastener 1000.

In one implementation of block 2220, the tightening of the fasteners 1404 may be done in a known sequential manner such as in a star pattern. Other patterns of tightening the fasteners 1404 may be performed during block 2220. In some applications, the fasteners can be sensitive to being over-torqued and tightened. In block 2220, the fasteners 1404 may be tightened in a sequential pattern to avoid over-torqueing the fasteners and ensuring equal pressure is applied via each of the fasteners 1404.

In one implementation, the fasteners 1404 may include threads at one end thereof for being threadedly coupled to the first and second flange clamps. For example, in this implementation, the first and second openings (e.g., openings 508, 510) in the third flange clamp 1400 and fourth flange clamp 1402 may be clearance or through-hole openings without any threads. As such, the fasteners 1404 may be inserted first through the first and second openings (e.g., openings 508, 510) in the third and fourth flange clamps and the third plurality of openings 616 and the fourth plurality of openings 618 in the union plate 600. In this implementation, the first opening 708 and the second opening 710 in the first flange clamp 702 may be threaded. In the same manner, the first opening 808 and the second opening 810 in the second flange clamp 802 may be threaded. Thus, the threaded portion of the fasteners 1404 may be threadedly coupled to the threads in the first and second openings in the first and second flange clamps. As the fasteners 1404 are tightened in block 2220, the first flange clamp 702 and the third flange clamp 1402 move towards one another to clamp against their respective side of the union plate 600. Similarly, the second flange clamp 802 and the fourth flange clamp 1404 are moved towards one another to clamp against their respective side of the union plate 600. In this implementation, the fasteners 1404 may be inserted on the second side 1304 of the union plate 600. Once the flange clamps are clamped to the union plate 600, the fasteners 1000 coupled to the projection portions 1200 may be removed.

In another implementation, the first and second openings (e.g., openings 508, 510) in the third flange clamp 1400 and fourth flange clamp 1402 may be threaded openings, and the first opening 708 and the second opening 710 in the first flange clamp 702 as well as the first opening 808 and the second opening 810 in the second flange clamp 802 may be clearance or through-hole openings without threads. In this implementation, the fasteners 1404 may be longer such that the threaded portion of each fastener 1404 extends past the openings in the first and second flange clamps so that a washer and nut, for example, may be coupled to the threaded portion. Further, in this implementation, it may also be possible to insert the longer fasteners 1404 through the fasteners on the first side 1302 of the union plate 600 or the second side 1304 of the union plate 600.

In yet another implementation, the first and second openings (e.g., openings 508, 510) in the third flange clamp 1400 and fourth flange clamp 1402 may be threaded, whereas the first opening 708 and the second opening 710 in the first flange plate 702 as well as the first opening 808 and the second opening 810 in the second flange clamp 802 may be clearance or through-hole openings. As such, the fasteners 1404 may be inserted first through the first and second openings in the first and second flange clamps and the third plurality of openings 616 and the fourth plurality of openings 618 in the union plate 600. Thus, the threaded portion of the fasteners 1404 may be threadedly coupled to the threads in the first and second openings in the third and fourth flange clamps.

Referring to illustrated implementations of FIGS. 16 and 17 of the present disclosure, it is noted that each flange clamp can be shaped and structured differently than the first flange clamp 702 and second flange clamp 802. For example, the position of the extended body portion and flange portion may be arranged differently than that in the first flange clamp 702 and second flange clamp 802. In other words, the extended body portion 714 of the first flange clamp 702 and the extended body portion 814 of the second flange clamp 802 is shown in FIGS. 7-15 to be offset vertically when coupled to the union plate 600. This too is shown in FIG. 16. In FIG. 17, however, the extended body portions and thus projected portions of each flange clamp is offset to the side horizontally. In other non-illustrated example implementations, the extended body portion of a respective flange clamp may be located at an outer edge or periphery of the clamp body. In one example implementation, the extended body portion may be disposed angularly with respect to a horizontal or vertical axis passing through the flange clamp. In another example implementation, the extended body portion may be arranged at a 10°, 20°, 30°, 40°, 45°, 50°, 60°, 70°, or 80° relative to a vertical axis passing through the centers of both the first and second openings of the flange clamp. In other words, the location of the third opening and projecting portion of the flange clamp may differ from that shown in FIGS. 7-15.

In FIG. 16 of the present disclosure, an example implementation of a bulkhead assembly 1600 is illustrated. In this assembly 1600, a first fluid connector 1602 and a second fluid connector 1604 are coupled to the same side of the union plate 600. Here, the first fluid connector 1602 may be fluidly coupled to the union plate 600 via a first flange clamp assembly 1606. The first flange clamp assembly 1606 may include a first flange clamp 1610 and a second flange clamp 1612. The second fluid connector 1604 may be fluidly coupled to the union plate 600 via a second flange clamp assembly 1608. The second flange clamp assembly 1608 may also include a first flange clamp 1610 and a second flange clamp 1612. Each of the first and second flange clamps may include a plurality of openings 1614 in substantially similar locations as the first openings 708, 808 and second openings 710, 712 shown and described previously. The plurality of openings 1614 may be threaded or clearance openings (i.e., without threads).

The first flange clamp 1610 and the second flange clamp 1612 may include extended body portions that are offset vertically as shown in FIG. 16. Each extended body portion may form a projecting portion 1618 with a defined opening 1616 similar to the third openings 714, 814 described above. The opening 1616 is offset vertically in the illustrated implementation of FIG. 16 similar to that of the first and second flange clamps 702, 802 of FIGS. 7 and 8.

In the implementation of FIG. 16, a pair of fluid connectors 1602, 1604 are shown. In other implementations, only the first fluid connector 1602 or the second fluid connector 1604 may be coupled to the union plate 600. In yet other implementations, there may be more two or more fluid connectors coupled to one side of the union plate.

In yet a different implementation of the present disclosure, an example implementation of a bulkhead assembly 1700 is illustrated in FIG. 17. In this assembly 1700, a first fluid connector 1702 and a second fluid connector 1704 are coupled to the same side of the union plate 600. Here, the first fluid connector 1702 may be fluidly coupled to the union plate 600 via a first flange clamp assembly 1706. The first flange clamp assembly 1706 may include a first flange clamp 1710 and a second flange clamp 1712. The second fluid connector 1704 may be fluidly coupled to the union plate 600 via a second flange clamp assembly 1708. The second flange clamp assembly 1708 may also include a first flange clamp 1710 and a second flange clamp 1712. Each of the first and second flange clamps may include a plurality of openings 1714 in substantially similar locations as the first openings 708, 808 and second openings 710, 712 shown and described previously. The plurality of openings 1714 may be threaded or clearance openings (i.e., without threads).

The first flange clamp 1710 and the second flange clamp 1712 may include extended body portions that are offset horizontally as shown in FIG. 17. Each extended body portion may form a projecting portion 1718 with a defined opening 1716 similar to the third openings 714, 814 described above. The opening 1716 is offset horizontally in the illustrated implementation of FIG. 17 unlike that of the first and second flange clamps 702, 802 of FIGS. 7 and 8 and the flange clamps of FIG. 16. In each flange clamp of FIGS. 7, 8, 16, and 17, the extended body portion and corresponding projecting portion is located at an outer edge or periphery of the respective flange clamp. This allows a fastener to be coupled to the projecting portion to help with retention and assembly/disassembly.

In the aforementioned illustrated implementations of FIGS. 16 and 17, the flange clamp assemblies 1606, 1608, 1706, 1708 are each illustrated as including a combination of flange clamps. For example, the first flange clamp assembly 1606 is shown in FIG. 16 as including a combination of a first flange clamp 1610 and a second flange clamp 1612. The first and second flange clamps 1610, 1612 are each shown as including two of the four mounting openings 1614 and one of the two retention openings 1616. In this implementation, the first and second flange clamps may be referred to as a half flange clamp given each has half of the mounting openings and half of the retention openings.

In alternative implementations, however, each flange clamp may be designed differently. In one implementation, a flange clamp may be a full flange clamp having all of the mounting openings necessary for coupling to the union plate 600 and a corresponding one or more flange clamps on the opposite side of the union plate 600. The full flange clamp, for example, may include four mounting openings 1614. In one implementation, the full flange clamp may include a pair of extended body portions with each including a retention opening 1616. In yet another implementation, the full flange clamp may include all of the mounting openings 1614 and only a single retention opening 1616. In a further implementation, the full flange clamp may include two or more retention openings 1616 and a plurality of mountings openings (i.e., two or more). With a full flange clamp, the location of the projecting portion and retention opening may be at a periphery or outer edge of the full flange clamp similar to the illustrated implementations of FIGS. 16 and 17.

In another implementation, a flange clamp may be a quarter flange clamp including at least one mounting opening and a retention opening. In an example implementation, a flange clamp assembly having four mounting openings may be formed by four quarter flange clamps. In this implementation, each quarter flange clamp may include a single mounting opening and a single retention opening. Moreover, in this implementation, each quarter flange clamp may include an extended body portion including a projecting portion and the retention opening. Each quarter flange clamp may couple a fluid connector to the union plate similar to the previously described implementations.

In FIGS. 16 and 17, the first flange clamp assembly 1606, 1706 and the second flange clamp assembly 1608, 1708 are shown on only one side of the union plate 600. However, in some implementations, the flange clamp assemblies may be coupled to the opposite side of the union plate 600 as well. In other words, in some implementations, the flange clamp assemblies may be coupled to both sides of the union plate. In other implementations, the flange clamp assemblies may be coupled to either or both sides of the union plate 600. For example, in one implementation, the flange clamp assemblies of either FIGS. 16 or 17 may be installed on a first side of the union plate. In a second implementation, the flange clamp assemblies of either FIGS. 16 or 17 may be installed on a second side of the union plate. In a third implementation, the flange clamp assemblies of either FIGS. 16 or 17 may be installed on the first and second sides of the union plate.

In one example implementation, the flange clamp assemblies of either FIGS. 16 or 17 (or a different flange clamp assembly that is not illustrated such as, e.g., an assembly having a full flange clamp or several quarter flange clamps) may be installed on the first and second sides of the union plate. In this implementation, each flange clamp assembly may include the retention opening and an anti-rotational feature as described above. In this implementation, the method of assembly or disassembly may benefit from being able to remove the flange clamp assembly on either the first side or the second side of the union plate without having to remove the other flange clamp assembly. The retention opening formed in the projecting portion of each flange clamp may allow each flange clamp assembly to remain coupled to the union plate while a different flange clamp assembly is disassembled therefrom. Another benefit is the ability to assemble the flange clamp assemblies to the union plate in any order. Thus, the order of assembly is not dependent on which side of the union plate one of the flange clamp assemblies with a retention feature is provided. For sake of this disclosure, the retention feature refers to the projecting portion and retention opening (e.g., key opening 1616, 1716 or third opening 712, 812) as previously described.

In an implementation with the flange clamp assemblies of either FIGS. 16 or 17 (or a different flange clamp assembly that is not illustrated such as, e.g., an assembly having a full flange clamp or several quarter flange clamps) installed on the first and second sides of the union plate, the flange clamp assembly on one side of the union plate may include threaded openings and the flange clamp assembly on the opposite side thereof may include non-threaded, clearance openings. In this manner, a fastener may be first inserted through the flange clamps having the non-threaded clearance openings and then coupled to the opposite flange clamps having the threaded openings. In another implementation with the flange clamp assemblies of either FIGS. 16 or 17 (or a different flange clamp assembly that is not illustrated such as, e.g., an assembly having a full flange clamp or several quarter flange clamps) installed on the first and second sides of the union plate, the flange clamp assembly on one side of the union plate may include non-threaded, clearance openings and the flange clamp assembly on the opposite side thereof may include non-threaded, clearance openings. In this implementation, the fasteners may be first installed on either side of the union plate 600 and passed through the flange clamps on both sides of the union plate 600 before a nut or similar fastener is coupled to the threaded portion of the fastener for coupling the flange clamp assemblies to the union plate.

In several implementations, the union plate described herein may be formed of sheet metal. Other materials may be used in other implementations including steel, aluminum, titanium, plastic, etc. In yet other implementations, the union plate may be formed as a casting and/or machined.

In one implementation of the present disclosure, a flange clamp may be formed by investment casting. The flange clamp may be formed of a ductile iron and plated for corrosion resistance. In other implementations, the flange clamp may be formed by a machining process of billet material or an additive manufacturing process. In some implementations, the flange clamp may be formed from steel, aluminum, titanium, or a plastic material. The material selection of the flange clamp may be at least partially based on a minimum strength requirement. The minimum strength requirement may be a function of a type of pressure application the flange clamp will be used in. In one non-limiting example, the minimum stress requirement may be approximately 330 MPa with a minimum elongation of fracture of 3% in a high pressure application. In another non-limiting example, the minimum stress requirement may be approximately 215 MPa with a minimum elongation of fracture of 10% in a low or standard pressure application.

In some implementations, the thickness of each flange clamp may be designed to have a minimum thickness to accommodate a required minimum thread length. For example, a fastener may have a threaded length, l, and a flange clamp has a thickness, t, and a minimum tapped length, m, in a mating opening. In one implementation, the thickness, t, of the flange clamp is at least as thick as the minimum tapped length, m. In another implementation, the thickness, t, of the flange clamp may be at least 1.5 times the minimum tapped length, m. In yet another implementation, the thickness, t, of the flange clamp may be at least twice the minimum tapped length, m. In a further implementation, the thickness, t, of the flange clamp may be at least 1-3 times the minimum tapped length, m. For purposes of this disclosure, the thickness, t, of the flange clamp is at least the same if not greater than the minimum tapped length, m.

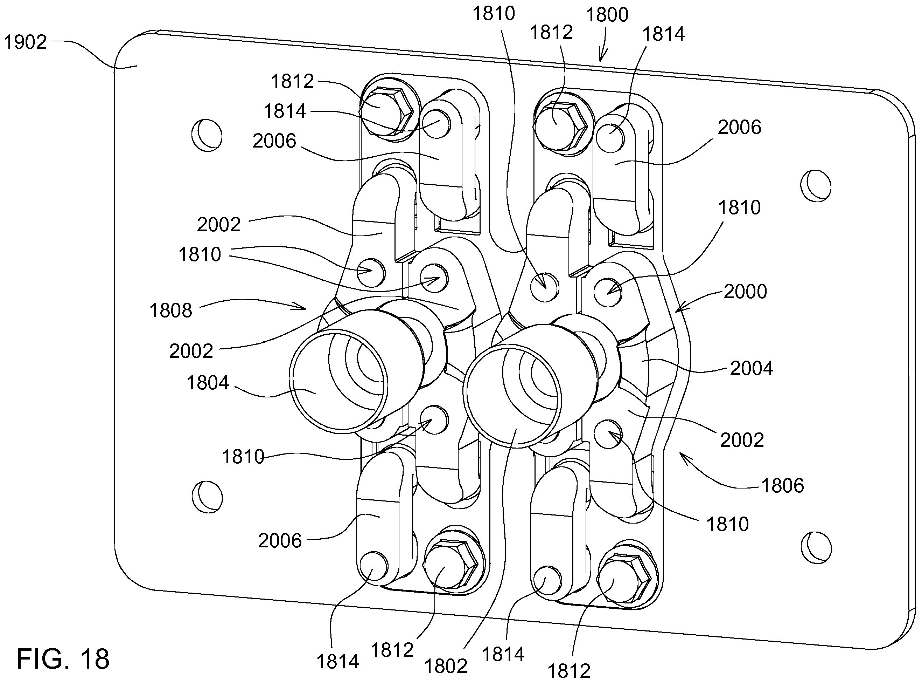

In another example implementation of the present disclosure, a different bulkhead assembly 1800 is shown in FIGS. 18-21. In this implementation, it may be possible to independently assemble and disassemble the mating fluid connector from either side of the union plate. This may be achieved with a different structural design for the retention feature (i.e., the projecting portion and retention opening) from the previously described implementations. In FIG. 18, for example, the bulkhead assembly 1800 may include a first fluid connector 1802 and a second fluid connector 1804. In this illustrated implementation, the first fluid connector 1802 and the second fluid connector 1804 are shown coupled to the same side of a union plate 1900 having a plate body 1902. Although not shown, a third fluid connector may be fluidly coupled to the first fluid connector 1802, and a fourth fluid connector may be fluidly coupled to the second fluid connector 1804. The third and fourth fluid connectors may be located and coupled to the opposite side of the union plate 1900.

In FIG. 18, a first flange clamp assembly 1806 may couple the first fluid connector 1802 to the union plate 1900, and a second flange clamp assembly 1808 may the second fluid connector 1804 to the union plate 1900. The first flange clamp assembly 1806 and the second flange clamp assembly 1808 may include a plurality of first openings 1810 for coupling each assembly to the union plate 1900. In particular, the first flange clamp assembly 1806 may be coupled to another flange clamp assembly located on the opposite side of the union plate 1900 via a plurality of fasteners coupled thereto via the plurality of first openings 1810. In FIG. 18, a first fastener 1812 and a second fastener 1814 are shown for coupling the flange clamp assemblies to the union plate 1900.

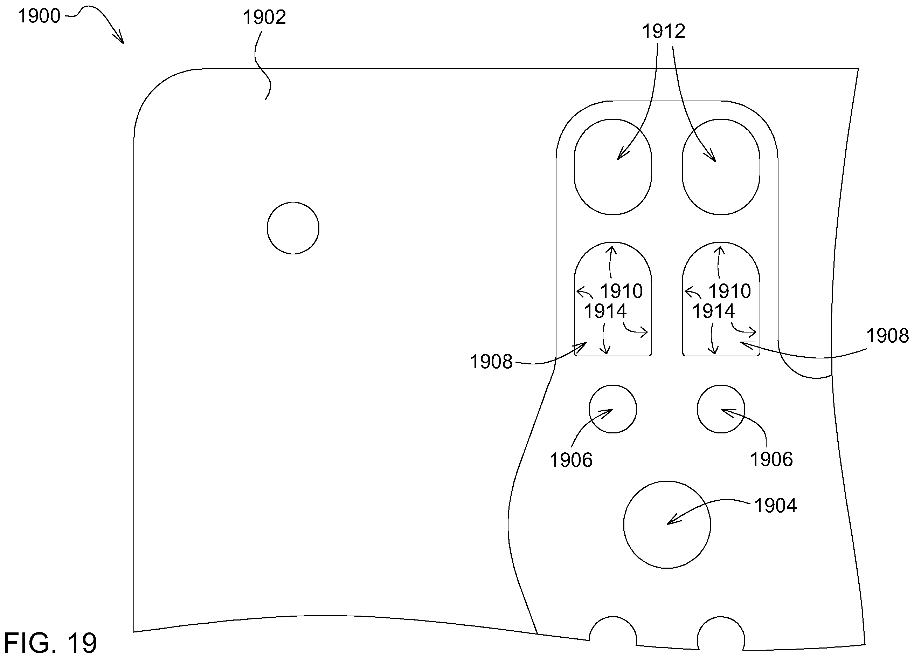

Referring to FIG. 19, a portion of the union plate 1900 is shown. Here, the union plate 1900 is formed by a plate body 1902 having a plurality of openings formed therein. For example, the union plate 1900 may include a connector opening 1904 formed therein. The fluid connectors may be arranged relative to the union plate 1900 such that fluid may be transferred therebetween through the connector opening 1904. The union plate 1900 may also include one or more first coupler openings 1906 that each may be aligned with a corresponding one of the plurality of first openings 1810 in the respective flange clamp assembly.

In the implementation of FIG. 19, the union plate 1900 may also include one or more elongate slot openings 1908. The one or more elongate slot openings 1908 may be oval or egg-like in shape in some implementations. In other implementations, including the one depicted in FIG. 19, the one or more elongate slot openings 1908 may be shaped to include a rounded or curved portion 1910 and one or more substantially straight or linear portions 1914. In other implementations, the one or more elongate slot openings 1908 may be substantially rectangular or shaped in another manner. The union plate 1900 of FIG. 19 may also include one or more second coupler openings 1912, as shown. In one implementation, each of the one or more second coupler openings 1912 may be larger than the one or more first coupler openings 1906. In another implementation, each of the one or more second coupler openings 1912 may be smaller than the one or more first coupler openings 1906. In a further implementation, each of the one or more second coupler openings 1912 may be approximately the same size as the one or more first coupler openings 1906.

In at least one implementation, the one or more elongate slot openings 1908 may be larger than the one or more first coupler openings 1906 and the one or more second coupler openings 1912. In another implementation, the one or more elongate slot openings 1908 may be smaller than the one or more first coupler openings 1906 and the one or more second coupler openings 1912. In yet another implementation, the one or more elongate slot openings 1908 may be larger than either the one or more first coupler openings 1906 or the one or more second coupler openings 1912 but not both. In a further implementation, the one or more elongate slot openings 1908 may be approximately the same size as one or both of the one or more first coupler openings 1906 and the one or more second coupler openings 1912.

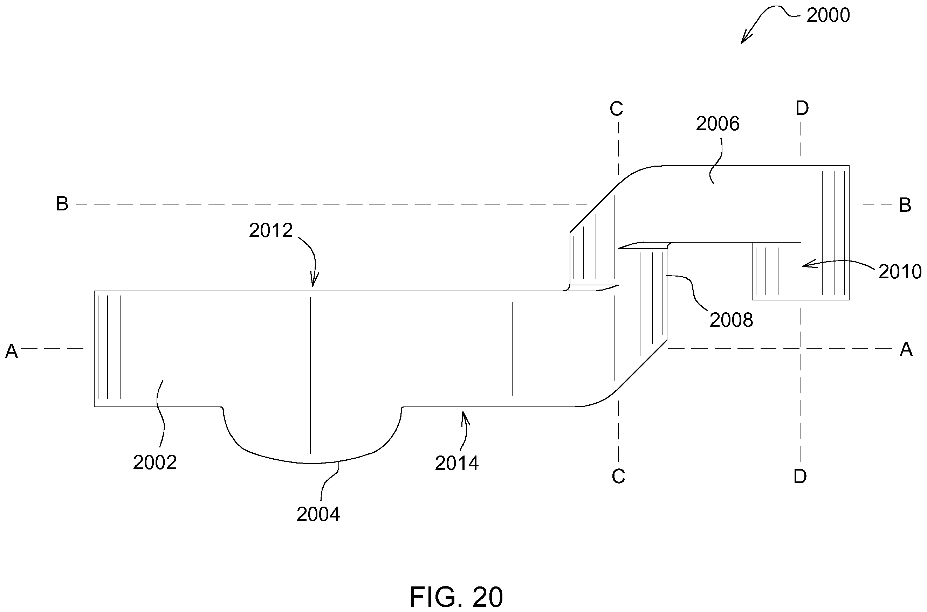

In FIG. 20 of the present disclosure, an example implementation of a flange clamp 2000 of the first flange clamp assembly 1806 or second flange clamp assembly 1808 is shown. The flange clamp 2000 may include a clamp body having a first body portion 2002 and a second body portion 2006. The second body portion 2006 may be offset from the first body portion 2002 as shown in FIG. 20. In particularly, the first body portion 2002 may be arranged along a first axis, A, and the second body portion 2006 may be arranged along a second axis, B. In the implementation of FIG. 20, the first axis, A, and the second axis, B, may be parallel to one another. In other implementations, the first and second axes may be angled relative to one another but not parallel. The flange clamp 2000 may further include a raised portion 2004 formed on one side of the first body portion 2002. Similar to the other raised portions described herein, the raised portion 2004 may form a stiffening rib or structure for supporting the flange clamp 2000. The raised portion 2004 may be an optional feature in this implementation as well as the other implementations described herein. In the implementation of FIG. 20, the second body portion 2006 is offset from one side of the first body portion 2002 that is opposite from the side of the first body portion 2002 in which the raised portion 2004 is located. In other words, the second body portion 2006 is offset from a first surface 2012 or side of the first body portion 2002, whereas the raised portion 2004 is formed on a second surface 2014 or side of the first body portion 2002.

The flange clamp 2000 may include a first post portion 2008 and a second post portion 2010. The first post portion 2008 may be aligned along a third axis, C, in FIG. 20 whereas the second post portion 2010 may be aligned along a fourth axis, D. In one implementation, the third axis, C, may be parallel to the fourth axis, D. In another implementation, the third axis and fourth axis may be angled relative to one another but not parallel to one another. In any event, the third post portion 2008 and the fourth post portion 2010 may be offset from one another as shown in FIG. 20. The second body portion 2006 may be coupled to the first body portion 2002 via the first post portion 2008. In FIG. 20, the first post portion 2008 is shown as being substantially perpendicular relative to the first surface 2012 of the first body portion 2002. In other implementations, the first post portion 2008 may be angled relative to the first surface 2012 at an angle greater than 90°. In some implementations, the first post portion 2008 may be angled relative to the first surface 2012 at an angle between 90°-180°. In a further implementation, the first post portion 2008 may be angled relative to the first surface 2012 at an angle between 90°-150°. In yet a further implementation, the first post portion 2008 may be angled relative to the first surface 2012 at an angle between 90°-135°.

In one implementation, the first post portion 2008 may be located generally at one end of the second body portion 2006 and the second post portion 2010 may be located generally at an opposite end thereof. In another implementation, the second body portion 2006 may have a first end and a second end, and the first post portion 2008 may be located generally towards the first end and the second post portion 2010 may be located generally towards the second end. In a further implementation, the second body portion 2006 may have a first end and a second end, and the first post portion 2008 may be located closer towards the first end compared to the second post portion 2010, and the second post portion 2010 may be located closer towards the second end compared to the first post portion 2008.

The second post portion 2010 in FIG. 20 is shown being disposed in a generally vertical or downward orientation relative to the second body portion 2006. In one implementation, the second post portion 2010 may extend from the second body portion 2006 generally perpendicularly relative to the second axis, B. In another implementation, the second post portion 2010 may extend from the second body portion 2006 at an angle between 10°-170° relative to the second axis, B. In yet another implementation, the second post portion 2010 may extend from the second body portion 2006 at an angle between 20°-160° relative to the second axis, B. In a further implementation, the second post portion 2010 may extend from the second body portion 2006 at an angle between 30°-150° relative to the second axis, B. In yet a further implementation, the second post portion 2010 may extend from the second body portion 2006 at an angle between 45°-135° relative to the second axis, B. In still a further implementation, the second post portion 2010 may extend from the second body portion 2006 at an angle between 60°-120° relative to the second axis, B. In yet another implementation, the second post portion 2010 may extend from the second body portion 2006 at approximately 90° relative to the second axis, B.

The flange clamp 2000 of FIG. 20 may form part of the first flange clamp assembly 1806 and the second flange clamp assembly 1808 of FIG. 18. For example, in one implementation, the flange clamp 2000 may be located on both sides of each fluid connector. Moreover, in the illustrated implementation of FIGS. 18-21, the flange clamp 2000 may be located on both sides of the first fluid connector 1802 as well as the second fluid connector 1804. In the implementation of FIG. 18, for example, there may be a pair of flange clamps 2000 that form the first flange clamp assembly 1806 and a pair of flange clamps 2000 that form the second flange clamp assembly 1808. Moreover, in the implementation of FIG. 18, a third flange clamp assembly (not shown) may be coupled to the union plate 1900 on the opposite side thereof with the first flange clamp assembly, and a fourth flange clamp assembly (not shown) may be coupled to the union plate 1900 on the opposite side thereof with the second flange clamp assembly. In each instance, there may be a pair of flange clamps 2000 that form the third flange clamp assembly (not shown) and a pair of flange clamps 2000 that form the fourth flange clamp assembly (not shown).

In the implementation of FIG. 20, the flange clamp 2000 is shown without the first openings 1810 depicted. The first openings 1810, however, may be formed in the first body portion 2002. In one implementation, the first openings 1810 may be formed in the first body portion 2002 on each side of the raised portion 2004. For example, a first of the first openings 1810 may be formed therein on one side of the raised portion 2004 closest to the first post portion 2008, and a second of the first openings 1810 may be formed therein on an opposite side of the raised portion 2004 furthest from the first post portion 2008. In one implementation, each of the first openings 1810 may be threaded openings. In another implementation, each of the first openings 1810 may be non-threaded, clearance openings. In yet another implementation, at least one of the first openings 1810 may be a threaded opening. In still another implementation, at least one of the first openings 1810 may be a non-threaded opening.

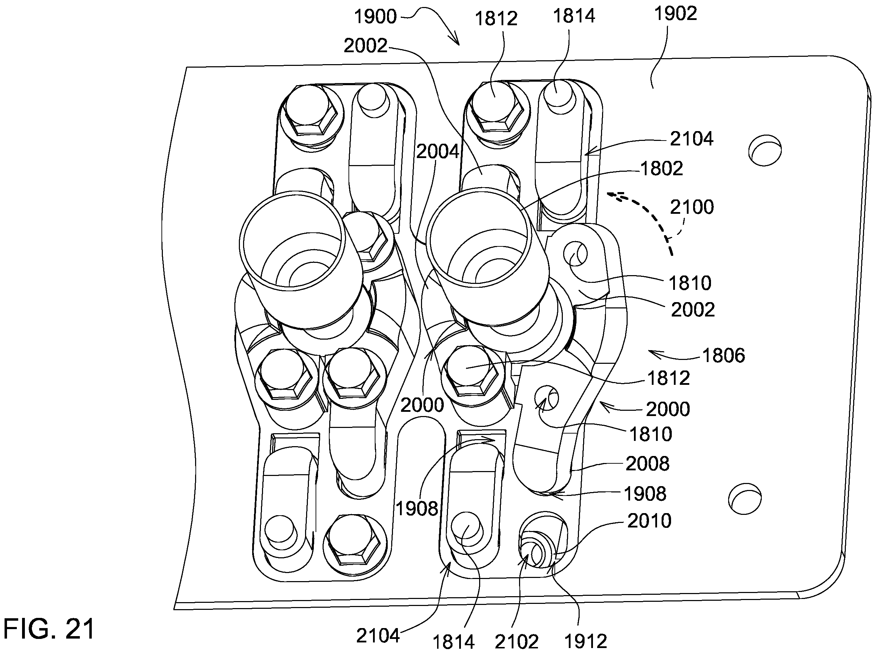

As shown in FIG. 21, a retention opening 2102 may be formed in the second post portion 2010 of the flange clamp 2000. The retention opening 2102 may be a threaded opening in one implementation. In another implementation, the retention opening 2102 may be a non-threaded, clearance opening. In some implementations, the first openings 1810 in the flange clamp 2000 may be non-threaded, clearance openings whereas the retention opening 2102 is a threaded opening. In other implementations, the first openings 1810 in the flange clamp 2000 may be threaded openings whereas the retention opening 2102 is a non-threaded, clearance opening. In another implementation, the first openings 1810 and the retention opening 2102 in the flange clamp 2000 may be non-threaded, clearance openings. In yet a further implementation, the first openings 1810 and the retention opening 2102 in the flange clamp 2000 may be threaded openings.

In one implementation, the flange clamps 2000 of the first clamp assembly 1806 on the first side of the union plate 1900 has threaded first openings 1810, whereas the flange clamp used for the third flange clamp assembly located on a second, opposite side of the union plate 1900 has non-threaded, clearance first openings. In this implementation, fasteners may be first inserted through the non-threaded, clearance first openings in the flange clamps on the second side of the union plate 1900 and then threaded to the threaded first openings 1810 of the first flange clamp assembly 1806 during the assembly process. In other implementations, the opposite may be true where the first openings in the first flange clamp assembly 1806 are non-threaded clearance openings 1810, and the third flange assembly includes flange clamps with threaded first openings. In still other implementations, the flange clamps on both sides of the union plate 1900 may include non-threaded, clearance openings such that fasteners may pass through each of the first openings in the first and third flange clamp assemblies and a nut or similar fastener may be used to couple the flange clamp assemblies to one another and the union plate 1900.

Referring to the illustrated implementation of FIG. 21, the first flange clamp assembly 1806 is shown being coupled to the union plate 1900. In this implementation, the first flange clamp assembly 1806 includes a pair of flange clamps 2000. During the assembly process, each flange clamp 2000 may be aligned with the different openings in the union plate 1900 including the coupler opening 1904, the one or more first coupler openings 1906, the one or more elongate slot openings 1908, and the one or more second openings 1912.

The second body portion 2006 and second post portion 2010 may be integrally formed with one another to form a J-like structure. In other implementations, the second body portion 2006 may be coupled to the second post portion 2010 via a fastener, a slide-connection, latch, adhesive, welding, etc. To assemble the flange clamp 2000 to a first side of the union plate 1900, the second post portion 2010 may be first inserted through one of the one or more elongate slots 1908 formed in the union plate 1900. As such, the second post portion 2010 is located on the second side of the union plate 1900 opposite the first side. The flange clamp 2000 may then be rotated or maneuvered to enable the second body portion 2006 to pass through the same elongate slot 1908 to the second side of the union plate 1900. Next, the flange clamp 2000 may be rotated or moved again to align the second post portion 2010 with one of the one or more second coupler openings 1912 formed in the union plate 1900. Here, the second coupler opening 1912 that is aligned with the corresponding elongate slot and first coupler openings 1906 is the one in which the second post portion 2010 is aligned with. Once the second post portion 2010 is aligned with the second coupler opening 1912, the flange clamp 2000 may be maneuvered such that the second post portion 2010 passes through the second coupler opening 1912 and returns to the first side of the union plate 1900.

In this position, the first body portion 2002 of the flange clamp 2000 is located on the first side of the union plate 1900, and the second body portion 2006 of the flange clamp 2000 is located on the second side of the union plate 1900. This assembly process is partially shown in FIG. 21 where the second post portion 2010 and second body portion 2006 are located on the second side of the union plate 1900, and the flange clamp 2000 is rotated in a counterclockwise direction indicated by arrow 2100 to align the second post portion 2010 with the second coupler opening 1912. In doing so, the first openings 1810 in the flange clamp 2000 may also be aligned with the one or more first coupler openings 1906 in the union plate 1900. Moreover, a curved portion of the first body portion 2002 of the flange clamp is aligned with the connector opening 1904 formed in the union plate 1900 such that the flange clamp 2000 may be used for clamping and fluidly sealing the first fluid connector 1802 to the union plate 1900.

In the aforementioned assembly process, as the second post portion 2010 and second body portion 2006 are maneuvered relative to the union plate 1900 to align the second post portion 2010 with the second coupler opening 1912, the flange clamp 2000 may be tilted or rotated in such a way that the flange clamp 2000 is arranged at an angle relative to the union plate 1900. The rounded or curved portion 1910 of the elongate slot 1908 may help to allow for this maneuverability of the flange clamp 2000 relative to the union plate 1900. Moreover, the second post portion 2010 may include a rounded or curved profile to also assist with the maneuverability of the flange clamp 2000 relative to the union plate 1900.

A pair of flange clamps 2104 forming the third flange clamp assembly are partially shown in FIG. 21 such that each flange clamp 2104 may be coupled to the flange clamps 2000 that form the first flange clamp assembly 1806. Each flange clamp 2104 may be structured similarly to the flange clamp 2000 such that each flange clamp 2104 includes a first body portion, a second body portion, a first post portion, and a second post portion. When assembling and coupling the first flange clamp assembly 1806 to the third flange clamp assembly, each of the flange clamps may be at least partially located on both the first and second sides of the union plate. In the implementation shown in FIG. 21, the first body portion 2002 of each flange clamp 2000 of the first flange clamp assembly 1806 is located on the first side of the union plate 1900 while the second body portion 2006 thereof is located on the second side of the union plate 1900. In the same way, a first body portion of each flange clamp 2104 is located on the second side of the union plate 1900 whereas a second body portion is located on the first side of the union plate 1900.

In the example implementations of FIGS. 18 and 21, the first fastener 1812 may be used for passing through and/or coupling to the first openings 1810 in the flange clamps 2000. The first fastener 1812 may therefore be used for coupling the flange clamps 2000 to the union plate 1900 for fluidly sealing and clamping the fluid connector 1802 to the union plate 1900. The second fastener 1814 may be used for coupling to the retention feature, i.e., the second post portion 2010, via the retention opening 2102. In some implementations, when the second fastener 1814 couples the second post portion 1810 to the union plate 1900, the coupling thereof helps retain the flange clamp 2000 to the union plate 1900 to allow the flange clamps on the opposite side thereof to be assembled or disassembled. Here, the flange clamp 2000 may not be disassembled and removed from the union plate 1900 during this process. In other implementations, when the second fastener 1814 couples the second post portion 1810 to the union plate 1900, the coupling thereof may form an anti-rotational feature that inhibits or prevents the flange clamp 2000 form rotating relative to the union plate 1900.

In the example implementation of FIGS. 18-21, the second post portion 2010 is shown having a rounded or curved profile. In other implementations, the second post portion 2010 may have a square, rectangular, triangular, pentagonal, hexagonal, octagonal, oval-like shape, or any other known type of shaped profile. Likewise, the second coupler openings may also be shaped in accordance with the shaped profile of the second post portion 2010. In this way, the second post portion 2010 may fit within the second coupler opening 1912 like a key being inserted into a key opening.

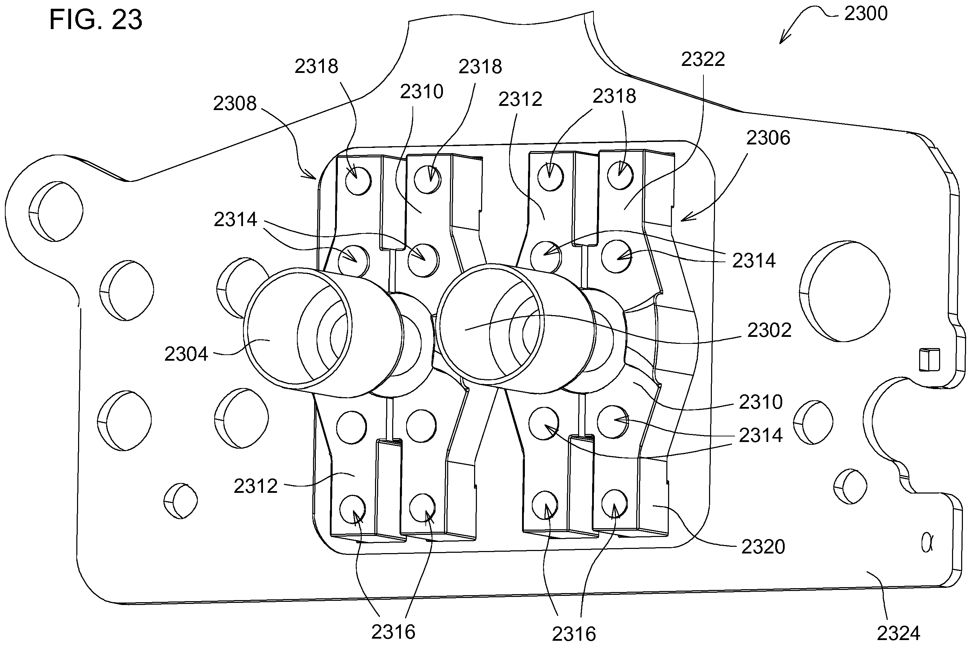

In FIG. 23 of the present disclosure, another example implementation of a bulkhead assembly 2300 is illustrated. In this assembly 2300, a first fluid connector 2302 and a second fluid connector 2304 are shown being coupled to one side of a union plate 2324. In several implementations, the union plate 2324 may be similar to the union plate 600 of FIG. 6. In FIG. 23, the first fluid connector 2302 may be fluidly coupled to the union plate 2324 via a first flange clamp assembly 2306. The first flange clamp assembly 2306 may include a first flange clamp 2310 and a second flange clamp 2312. The second fluid connector 2304 may be fluidly coupled to the union plate 2324 via a second flange clamp assembly 2308. The second flange clamp assembly 2308 may also include a first flange clamp 2310 and a second flange clamp 2312. In at least one implementation, only a single fluid connector with a single flange clamp assembly having one first flange clamp 2310 and one second flange clamp 2312 may be coupled to the union plate 2324. In another implementation, there may be additional fluid connectors as well as additional flange clamp assemblies coupled to the union plate 2324.

As shown in the implementation of FIG. 23, each of the first and second flange clamps may include a plurality of openings 2314 in substantially similar locations as the first openings 708, 808 and second openings 710, 712 shown and described previously. The plurality of openings 2314 may be threaded or clearance openings (i.e., without threads). As previously described, fasteners (not shown) may be coupled to or through the plurality of openings 2314 for coupling each flange clamp to the union plate 2324. Flange clamps (not shown) such as those shown in FIGS. 4 and 14 of the present disclosure may be coupled to the opposite side of the union plate 2324 for coupling to the first and second flange clamp assemblies of FIG. 23. Alternatively, flange clamp assemblies such as those shown in FIG. 17 may be coupled to the opposite side of the union plate 2324 shown in FIG. 23.

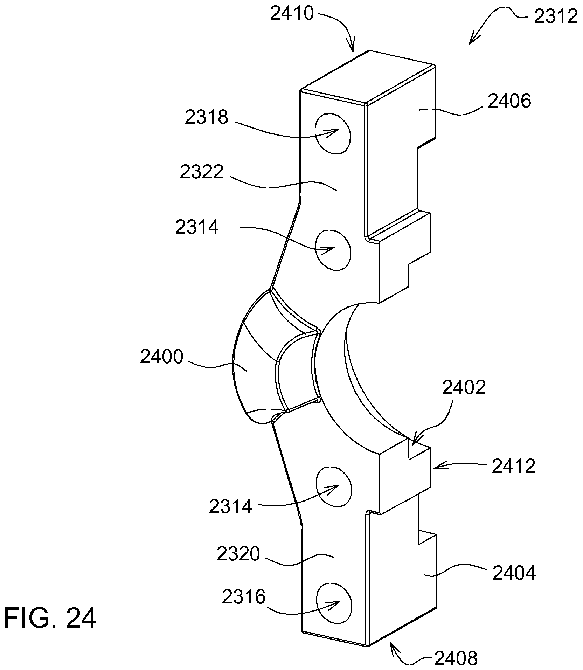

The first flange clamp 2310 and the second flange clamp 2312 may include extended body portions that are offset as shown in FIGS. 23 and 24. In particular, each flange clamp may include at least two extended body portions, as shown. In FIG. 23, for example, the first flange clamp 2310 and second flange clamp 2312 may include a first extended body portion 2320 and a second extended body portion 2322. A first keyhole or retention opening 2316 may be formed in the first extended body portion 2320, and a second keyhole or retention opening 2318 may be formed in the second extended body portion 2322.

As best shown in FIG. 24, each flange clamp may include the first extended body portion 2320 formed at a first end 2408 of the flange clamp and the second extended body portion 2322 formed at a second end 2410 thereof. Each of the first and second extended body portions may form a projecting portion. For example, the first extended body portion 2320 may form a first projecting portion 2404, and the second extended body portion 2322 may form a second projecting portion 2406. The first projecting portion 2404 may project through a corresponding opening in the union plate 2324 and the second projecting portion 2406 may project through another corresponding opening in the union plate 2324. In this manner, fasteners may initially couple to the first and second projecting portions on the opposite side of the union plate 2324 shown in FIG. 23 to retain the flange clamp 2312 to the plate 2324.

In the implementation of FIG. 24, the flange clamp 2312 may include a raised portion 2400 on one side thereof and a recessed portion 2402 on the opposite side thereof. In the illustrated implementation, the first projecting portion 2404 and the second projecting portion 2406 are arranged to project substantially perpendicularly to a plane along which an inner surface 2412 of the flange clamp 2312 lies. Moreover, the first extended body portion 2320 and the second body portion 2322 are shown being offset from one another by approximately 180°. In other implementations, the first and second body portions may be offset from one another by less than 180°. For example, in one implementation, the first and second body portions may be offset from one another by 150°. In another implementation, the first and second body portions may be offset from one another by 120°. In a further implementation, the first and second body portions may be offset from one another by 90°. In yet a further implementation, the first and second body portions may be offset from one another by less than 90°.

In the present disclosure, the implementations described herein may be used on any agricultural, construction, or forestry equipment. For example, the implementations described herein may be used on sprayers, harvesters, tractors, and any other type of heavy equipment. The implementations described herein may be used on any four bolt flange assemblies. The implementations described herein may be located on a chassis, body frame, main frame, wing frame, auxiliary frame, bulkhead module, and the like. The implementations described herein may be provided at locations of pump assemblies that provide pressure and flow to motors (e.g., wheel motors). Any frame of a work machine or vehicle (e.g., agricultural, construction, forestry, cement truck, dump truck, refuse truck, fuel truck, work vehicle, passenger vehicle, etc.) that includes a frame with a bulkhead may include any one of the implementations described herein. Any type of rail car, bus, motorhome, plane, boat, etc. that includes a frame with a bulkhead may include any one of the implementations described herein.

While exemplary implementations incorporating the principles of the present disclosure have been described herein, the present disclosure is not limited to such implementations. Instead, this application is intended to cover any variations, uses, or adaptations of the disclosure using its general principles. Further, this application is intended to cover such departures from the present disclosure as come within known or customary practice in the art to which this disclosure pertains.

## Claims

1. A bulkhead assembly, comprising a bulkhead plate (600) and a flange clamp (512) for coupling a fluid connector (700) to the bulkhead plate (600), the flange clamp (512) comprising:
a clamp body (514) having a curved inner surface configured to be engageable with a fluid connector (700);
a plurality of openings (518, 520, 522) formed in the clamp body (514), the plurality of openings (518, 520, 522) including at least a first opening (518), a second opening (520), and a third opening (522);
at least one extended body portion (536) integrally formed at an outer periphery of the clamp body (514);
a retaining portion (534) integrally formed with the at least one extended body portion (536), the retaining portion (534) projecting away from the at least one extended body portion (536);
wherein the retaining portion (534) is configured to be disposable within an opening formed in the bulkhead plate (600), where the retaining portion (534) is configured to selectively maintain an orientation of the clamp body (514) on the bulkhead plate (600).

2. The bulkhead assembly of claim 1, wherein the plurality of openings (518, 520, 522) formed in the clamp body (514) are axially aligned with one another.

3. The bulkhead assembly of any preceding claim, wherein the third opening (522) is formed in the at least one extended body portion (536), the third opening (522) defined through the retaining portion (534).

4. The bulkhead assembly of any preceding claim, wherein the clamp body (514) comprises a first end and a second end, the second end spaced from the first end, where the at least one extended body portion (536) extends from the second end of the clamp body (514).

5. The bulkhead assembly of any claim 1 to 3, wherein the clamp body (514) comprises a first end and a second end, the second end spaced from the first end, where the at least one extended body portion (536) extends from the clamp body (514) at a location between the first end and the second end.

6. The bulkhead assembly of any preceding claim, wherein the first opening (518) is formed in the clamp body (514) adjacent the first end, the second opening (520) is formed in the clamp body (514) adjacent the second end.

7. The bulkhead assembly of any preceding claim, wherein the retaining portion (534) comprises a shaped profile having at least three sides.

8. The bulkhead assembly of any preceding claim, wherein the retaining portion (534) comprises a triangular-shaped profile, square-shaped profile, rectangular-shaped profile, pentagonal-shaped profile, hexagonal-shaped profile, or octagonal-shaped profile.

9. The bulkhead assembly of any preceding claim, wherein the clamp body (2000) comprises a first body portion (2002) and a second body portion (2006), the first body portion being offset from the second body portion.

10. The bulkhead assembly of claim 9, further comprising a post portion (2008, 2010) located between the first body portion (2002) and the second body portion (2006).

11. The bulkhead assembly of claim 9 or 10, wherein the retaining portion is arranged parallel to and offset from the post portion (2008, 2010).

12. The bulkhead assembly of any preceding claim, wherein at least one of the plurality of openings (518, 520, 522) is a threaded opening (2102).

13. The bulkhead assembly of any preceding claim, the clamp body (514) comprising a first extended body portion (536) and a second extended body portion (536).

14. The bulkhead assembly of claim 13, wherein the clamp body (514) comprises a first end and a second end, the second end spaced from the first end;
wherein the first extended body portion (536) extends from the first end of the clamp body (514), and the second extended body portion (536) extends from the second end of the clamp body (514).

15. A method of assembling a bulkhead assembly for fluidly coupling a first fluid connector (700) to a second fluid connector (1300), the method of assembly comprising the bulkhead assembly of one of the claims 1 to 14; and further comprises:
positioning the first fluid connector (700) on a first side of a bulkhead plate (600) such that the first fluid connector (700) is aligned with a connector opening formed in the bulkhead plate (600);
aligning the flange clamp (512) of claim 1 adjacent to the first fluid connector (700) on the first side of the bulkhead plate (600);
locating a retaining portion (534) of the flange clamp (512) to project through an opening formed in the bulkhead plate (600);
coupling a first fastener to a retaining opening (522) formed in the retaining portion (534) of the flange clamp (512); and
selectively maintaining an orientation of the flange clamp (512) with respect to the bulkhead plate (600) via the coupling of the first fastener to the retaining portion (534).
